(19) Europäisches Patentamt
European Patent Office
Office européen des brevets

(11) EP 4 447 520 A1

(12) EUROPEAN PATENT APPLICATION
published in accordance with Art. 153(4) EPC

(43) Date of publication:
16.10.2024 Bulletin 2024/42

(51) International Patent Classification (IPC):
H04W 16/28 (2009.01)

(21) Application number: 22926887.5

(52) Cooperative Patent Classification (CPC):
H04W 16/28

(22) Date of filing: 21.12.2022

(86) International application number:
PCT/CN2022/140622

(87) International publication number:
WO 2023/155589 (24.08.2023 Gazette 2023/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.02.2022 CN 202210141763
24.03.2022 CN 202210321314

(71) Applicant: Huawei Technologies Co., Ltd.
Shenzhen, Guangdong 518129 (CN)

(72) Inventors:
• HE, Hongli
Shenzhen, Guangdong 518129 (CN)
• LI, Xueru
Shenzhen, Guangdong 518129 (CN)

(74) Representative: Gill Jennings & Every LLP
The Broadgate Tower
20 Primrose Street
London EC2A 2ES (GB)

(54) **UPLINK ACCESS METHOD AND COMMUNICATION APPARATUS**

(57) This application provides an uplink access method and a communication apparatus, and relates to the field of wireless communication technologies, to reduce a phenomenon of an uplink access failure. The method includes: A relay device receives at least one synchronization signal/physical broadcast channel block SSB from a network device, and forwards the at least one SSB. Each of the at least one SSB has one index, and the index is associated with a plurality of random access channel occasions ROs. The relay device receives an uplink access signal from a terminal on a first RO by using a first spatial domain receiving parameter. The first RO is one of the ROs associated with the index of each of the at least one SSB, the first spatial domain receiving parameter is determined based on a first spatial domain sending parameter used by the relay device to forward a first SSB, the first SSB is an SSB that is in at least one second SSB and that is closest to the first RO in time domain, and the second SSB is an SSB that is in the at least one SSB and that satisfies a preset condition.

900

FIG. 9

**Description**

This application claims priorities to Chinese Patent Application No. 202210141763.2, filed with the China National Intellectual Property Administration on February 16, 2022 and entitled "UPLINK ACCESS METHOD, NETWORK RELAY DEVICE, NETWORK DEVICE, AND ELECTRONIC DEVICE", and to Chinese Patent Application No. 202210321314.6, filed with the China National Intellectual Property Administration on March 24, 2022 and entitled "UPLINK ACCESS METHOD AND COMMUNICATION APPARATUS", both of which are incorporated herein by reference in their entireties.

**TECHNICAL FIELD**

Embodiments of this application relate to the wireless communication field, and in particular, to an uplink access method and a communication apparatus.

**BACKGROUND**

A relay device receives a synchronization signal/physical broadcast channel block (synchronization signal/physical broadcast channel block, SSB) of a network device, and forwards the synchronization signal/physical broadcast channel block to a terminal, so that the terminal synchronizes with the network device. There is an association relationship between an index of the SSB and a random access channel occasion (random access channel occasion, RO). For a specific RO in a plurality of ROs associated with an index, the relay device receives an uplink access signal from the terminal on the RO by using a spatial domain receiving parameter. However, a reception beam corresponding to the spatial domain receiving parameter may not be aligned with the terminal, and consequently, uplink access of the terminal fails.

**SUMMARY**

This application provides an uplink access method and a communication apparatus, to reduce a phenomenon of an uplink access failure. To achieve the foregoing objective, the following technical solutions are used in this application.

According to a first aspect, an uplink access method is provided. The method may be performed by a relay device, or may be performed by a chip used in a relay device. The following uses an example in which the method is performed by the relay device for description. The method includes: A relay device receives at least one synchronization signal/physical broadcast channel block SSB from a network device, and forwards the at least one SSB. Each of the at least one SSB has one index, and the index is associated with a plurality of random access channel occasions ROs. The relay device uses one spatial domain sending parameter when forwarding each of the at least one SSB. Then, the relay device receives an uplink access signal from a terminal on a first RO by using a first spatial domain receiving parameter. The first RO is the ROs associated with the index of each of the at least one SSB. The first spatial domain receiving parameter is determined based on a first spatial domain sending parameter used by the relay device to forward a first SSB. The first SSB is an SSB that is in at least one second SSB and that is closest to the first RO in time domain, and the second SSB is an SSB that is in the at least one SSB and that satisfies a preset condition.

The first SSB determined in the foregoing manner may be understood as an SSB received by the terminal. The terminal initiates the uplink access signal on the first RO after receiving the first SSB. Because the first spatial domain sending parameter corresponding to the first SSB is aligned with the terminal, the relay device determines the first spatial domain receiving parameter based on the first spatial domain sending parameter, and the relay device can align a reception beam direction with the terminal by using the first spatial domain receiving parameter. Therefore, the relay device receives the uplink access signal of the terminal on the first RO, to reduce a phenomenon of an uplink access failure. In addition, in this embodiment of this application, the network device, the relay device, and the terminal do not need to extend a sending pattern of the SSB, and impact on the device is small.

In a possible design, the preset condition includes the following three items. An index of the second SSB is associated with the first RO; the second SSB is before the first RO; and a time interval between the second SSB and the first RO is greater than or equal to a first threshold.

In a possible design, the preset condition includes the following three items. An index of the second SSB is associated with the first RO; the second SSB is before the first RO; and a time interval between the second SSB and the first RO is greater than a first threshold.

In a possible design, the method further includes: The relay device receives configuration information from the network device. The configuration information is used to configure a RO time-frequency resource, and the RO time-frequency resource includes at least a time-frequency resource of the first RO. The relay device determines an association relationship between the index of the second SSB and the first RO based on the configuration information.

In this way, the relay device determines the association relationship between the index of the second SSB and the first RO based on the configuration information.

In a possible design, that a relay device forwards the at least one SSB includes: The relay device periodically forwards an SSB with a first index. A spatial domain sending parameter used when the relay device forwards an SSB with the first index in a $y^{th}$ period is the same as a spatial domain sending parameter used when the relay device forwards an SSB with the first index in a $(y+M)^{th}$ period. Two or more SSBs in the at least one SSB have the first index, y and M are positive integers, and $M \geq 2$.

In a possible design, that a relay device forwards the at least one SSB includes: The relay device periodically forwards the at least one SSB. The at least one SSB includes an SSB with a first index. A spatial domain sending parameter used when the relay device forwards an SSB with the first index in a $y^{th}$ period is the same as a spatial domain sending parameter used when the relay device forwards an SSB with the first index in a $(y+M)^{th}$ period, y and M are positive integers, and $M \geq 2$.

In other words, at an interval of M periods, the relay device uses a same spatial domain sending parameter when forwarding SSBs with a same index.

In a possible design, the first index is the same as an index of the first SSB. For example, the SSB with the first index in the $y^{th}$ period is the first SSB, or the SSB with the first index in the $(y+M)^{th}$ period is the first SSB.

In a possible design, the first index is different from an index of the first SSB. In other words, the SSB with the first index in the $y^{th}$ period and the SSB with the first index in the $(y+M)^{th}$ period are SSBs other than the first SSB in the at least one SSB forwarded by the relay device.

In a possible design, the method further includes: The relay device sends first information to the network device. The first information indicates a value of M, so that the network device learns of a usage status of the spatial domain sending parameter used when the relay device forwards the SSB. For example, at the interval of M periods, the relay device uses the same spatial domain sending parameter when forwarding the SSBs with the same index.

In a possible design, the method further includes: The relay device receives indication information from the network device. The indication information includes information indicating m. The relay device determines a target spatial domain parameter based on a spatial domain sending parameter for forwarding an SSB in an $x^{th}$ period, so that the target spatial domain parameter used by the relay device is aligned with the terminal, where x is an integer determined based on m.

It should be understood that values of x and y may be the same or different.

In a possible design, x and m satisfy: $x=m+k*M+N$, where m, k, and N are integers.

In a possible design, that the relay device determines a target spatial domain parameter based on a spatial domain sending parameter for forwarding an SSB in an $x^{th}$ period includes: The relay device determines the target spatial domain parameter based on a spatial domain sending parameter for forwarding any SSB in the $x^{th}$ period. The relay device uses the same spatial domain sending parameter when forwarding all SSBs in the $x^{th}$ period.

Because one SSB in the $x^{th}$ period is the SSB received by the terminal, the spatial domain sending parameter used when the relay device sends the SSB in the $x^{th}$ period is aligned with the terminal. Because spatial domain sending parameters used by the relay device to forward all SSBs in the $x^{th}$ period are the same, when the target spatial domain parameter is determined based on the spatial domain sending parameter for forwarding any SSB in the period, the target spatial domain parameter can also be aligned with the terminal.

In a possible design, the SSB in the $x^{th}$ period includes at least the first SSB. In other words, the relay device forwards the first SSB in the $x^{th}$ period.

In a possible design, at least one SSB in the $x^{th}$ period has a same index as the index of the first SSB. In other words, in the $x^{th}$ period, the relay device does not forward the first SSB, but forwards the at least one SSB whose index is the same as the index of the first SSB.

In a possible design, the indication information further includes information indicating the first index. That the relay device determines a target spatial domain parameter based on a spatial domain sending parameter for forwarding an SSB in an $x^{th}$ period includes: The relay device determines the target spatial domain parameter based on a spatial domain sending parameter for forwarding an SSB whose index is the first index in the $x^{th}$ period.

Because the SSB with the first index in the $x^{th}$ period is the SSB received by the terminal, the spatial domain sending parameter used when the relay device sends the SSB is aligned with the terminal. When the target spatial domain parameter is determined based on the spatial domain sending parameter of the SSB, the target spatial domain parameter can also be aligned with the terminal.

In a possible design, the SSB whose index is the first index in the $x^{th}$ period is the first SSB. In other words, the relay device forwards the first SSB in the $x^{th}$ period.

In a possible design, the first index is the same as the index of the first SSB. In other words, in the $x^{th}$ period, the relay device does not forward the first SSB, but forwards at least an SSB whose index is the same as the index of the first SSB.

In a possible design, the target spatial domain parameter includes at least one of the following: a target spatial domain sending parameter or a target spatial domain receiving parameter. The target spatial domain sending parameter is used by the relay device to forward information from the network device to the terminal after the relay device receives the information from the network device. The target spatial domain receiving parameter is used by the relay device to receive information from the terminal before the relay device forwards the information from the terminal to the network device.

According to a second aspect, an uplink access method is provided. The method may be performed by a network device, or may be performed by a chip used in a network device. The following uses an example in which the method is performed by the network device for description. The method includes: A network device sends at least one SSB to a relay device; and the network device sends indication information to the relay device. The indication information includes information indicating m, and the indication information is used by the relay device to determine a target spatial domain parameter based on a spatial domain sending parameter for forwarding an SSB in an $x^{th}$ period, where x is an integer determined based on m.

In a possible design, x and m satisfy: x=m+k*M+N, where m, k, and N are integers.

In a possible design, the indication information further includes information indicating a first index. That the indication information is used by the relay device to determine a target spatial domain parameter based on a spatial domain sending parameter for forwarding an SSB in an $x^{th}$ period includes: The indication information is used by the relay device to determine the target spatial domain parameter based on a spatial domain sending parameter for forwarding an SSB whose index is the first index in the $x^{th}$ period.

In a possible design, the method further includes: The network device receives an uplink access signal from the relay device on a first random access channel occasion RO; the network device determines a first SSB based on the first RO, where the first SSB is one of the at least one SSB; and the network device determines m based on the first SSB, where m satisfies the following formula:

$$m = \text{mod}\left(\frac{SFN*T_{SFN}+h*T_{SFN}*a}{T_{SSB}}, M\right)$$

mod() represents a modulo operator, SFN represents a system frame number of a system frame in which the first SSB is located, $T_{SFN}$ represents a system frame length, h represents half-frame indication information included in the first SSB, a represents a coefficient, and $T_{SSB}$ represents a periodicity length of the SSB.

In other words, the network device determines the first SSB based on the first RO on which the uplink access signal is received. In addition, it may be understood as that a terminal initiates an uplink access signal on the first RO after receiving the first SSB. Therefore, a spatial domain sending parameter used by the relay device to forward the first SSB is aligned with the terminal, and with m in the indication information determined based on the first SSB, the relay device can also determine the target spatial domain parameter aligned with the terminal.

In a possible design, that the network device determines a first SSB based on the first RO includes: The network device determines the first SSB based on the first RO and a preset condition. The first SSB is an SSB that is in at least one second SSB and that is closest to the first RO in time domain, and the second SSB is an SSB that is in the at least one SSB and that satisfies the preset condition.

In a possible design, the preset condition includes: There is an association relationship between an index of the second SSB and the first RO; the second SSB is before the first RO; and a time interval between the second SSB and the first RO is greater than or equal to a first threshold.

In a possible design, the preset condition includes: There is an association relationship between an index of the second SSB and the first RO; the second SSB is before the first RO; and a time interval between the second SSB and the first RO is greater than a first threshold.

In a possible design, the method further includes: The network device receives first information from the relay device. The first information indicates a value of M.

In a possible design, the method further includes: The network device sends position information to the terminal. The position information includes at least information about a position of the relay device, and the position information is used by the terminal to determine whether the terminal can be served by the relay device.

In a possible design, the method further includes: The network device sends threshold information to the terminal. The threshold information includes the first threshold, and the first threshold is used by the terminal to determine a RO for sending an uplink access signal.

In a possible design, the target spatial domain parameter includes at least one of the following: a target spatial domain sending parameter or a target spatial domain receiving parameter. The target spatial domain sending parameter is used by the relay device to forward information from the network device to the terminal after the relay device receives the information from the network device. The target spatial domain receiving parameter is used by the relay device to receive information from the terminal before the relay device forwards the information from the terminal to the network device.

According to a third aspect, an uplink access method is provided. The method may be performed by a terminal, or may be performed by a chip used in a terminal. The following uses an example in which the method is performed by the terminal for description. The method includes: A terminal receives a first synchronization signal/physical broadcast channel block SSB from a relay device at a first moment; and the terminal determines a first random access channel occasion RO based on the first moment and the first SSB. An index of the first SSB is associated with the first RO. A moment corresponding to the first RO is not earlier than or later than a second moment. The second moment is later than the first moment, and there is an interval of a first threshold between the second moment and the first moment. The moment corresponding to the first RO is not later than or earlier than the third moment. The third moment is later than a fourth moment corresponding to a third SSB, and there is an interval of the first threshold between the third moment and the fourth moment. An index of the third SSB is the same as that of the first SSB, and a period in which the third SSB is located is a next period of a period in which the first SSB is located. The terminal sends an uplink access signal to the relay device on the first RO.

For the terminal, the terminal determines the first RO based on the foregoing manner, to initiate the uplink access signal on the first RO. In this way, for a receiving device of the uplink access signal, a spatial domain receiving parameter used by the receiving device is aligned with the terminal to the fullest extent, to ensure transmission of the uplink access signal to the fullest extent, and reduce a phenomenon of an uplink access failure.

In a possible design, before the terminal determines the first RO based on the first moment, the method further includes: The terminal receives position information from a network device. The position information includes at least information about a position of the relay device. The terminal determines, based on the position information, whether the terminal can be served by the relay device.

In a possible design, the method further includes: The terminal receives threshold information from the network device. The threshold information includes the first threshold.

According to a fourth aspect, an uplink access method is provided. The method may be performed by a relay device, or may be performed by a chip used in a relay device. The following uses an example in which the method is performed by the relay device for description. The method includes: A relay device receives at least two synchronization signal/physical broadcast channel blocks SSBs from a network device; and the relay device periodically forwards an SSB with a first index. A spatial domain sending parameter used when the relay device forwards an SSB with the first index in a $y^{th}$ period is the same as a spatial domain sending parameter used when the relay device forwards an SSB with the first index in a $(y+M)^{th}$ period. Two or more of the at least two SSBs have the first index, y and M are positive integers, and $M \geq 2$.

In a possible design, the method further includes: The relay device sends first information to the network device. The first information indicates a value of M.

According to a fifth aspect, an uplink access method is provided. The method may be performed by a relay device, or may be performed by a chip used in a relay device. The following uses an example in which the method is performed by the relay device for description. The method includes: A relay device receives indication information from a network device. The indication information includes information indicating m. The relay device determines a target spatial domain parameter based on a spatial domain sending parameter for forwarding an SSB in an $x^{th}$ period, where x is an integer determined based on m.

In a possible design, that the relay device determines a target spatial domain parameter based on a spatial domain sending parameter for forwarding an SSB in an $x^{th}$ period includes: The relay device determines the target spatial domain parameter based on a spatial domain sending parameter for forwarding any SSB in the $x^{th}$ period. The relay device uses the same spatial domain sending parameter when forwarding all SSBs in the $x^{th}$ period.

In a possible design, the indication information further includes information indicating the first index. That the relay device determines a target spatial domain parameter based on a spatial domain sending parameter for forwarding an SSB in an $x^{th}$ period includes: The relay device determines the target spatial domain parameter based on a spatial domain sending parameter for forwarding an SSB whose index is the first index in the $x^{th}$ period.

In a possible design, x and m satisfy: $x=m+k*M+N$, where m, k, and N are integers.

In a possible design, the target spatial domain parameter includes at least one of the following: a target spatial domain sending parameter or a target spatial domain receiving parameter. The target spatial domain sending parameter is used by the relay device to forward information from the network device to the terminal after the relay device receives the information from the network device. The target spatial domain receiving parameter is used by the relay device to receive information from the terminal before the relay device forwards the information from the terminal to the network device.

According to a sixth aspect, a communication apparatus is provided. The communication apparatus may be the relay device according to any one of the first aspect or the possible designs of the first aspect, or a chip implementing functions of the relay device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

The communication apparatus includes a processing unit, a sending unit, and a receiving unit. The processing unit is configured to control the receiving unit to receive at least one synchronization signal/physical broadcast channel block SSB from a network device. The processing unit is further configured to control the sending unit to forward the at least one SSB. Each of the at least one SSB has one index, and the index is associated with a plurality of random access channel occasions ROs. The communication apparatus uses one spatial domain sending parameter when forwarding each of the at least one SSB. The processing unit is further configured to control the receiving unit to receive an uplink access signal from a terminal on a first RO by using a first spatial domain receiving parameter. The first RO is one of the ROs associated with the index of each of the at least one SSB. The first spatial domain receiving parameter is determined based on a first spatial domain sending parameter used by the communication apparatus to forward a first SSB. The first SSB is an SSB that is in at least one second SSB and that is closest to the first RO in time domain, and the second SSB is an SSB that is in the at least one SSB and that satisfies a preset condition.

In a possible design, the preset condition includes the following three items. An index of the second SSB is associated with the first RO; the second SSB is before the first RO; and a time interval between the second SSB and the first RO is greater than or equal to a first threshold.

In a possible design, the preset condition includes the following three items. An index of the second SSB is associated with the first RO; the second SSB is before the first RO; and a time interval between the second SSB and the first RO is greater than a first threshold.

In a possible design, the receiving unit is further configured to receive configuration information from the network device. The configuration information is used to configure a RO time-frequency resource, and the RO time-frequency resource includes at least a time-frequency resource of the first RO. The processing unit is further configured to determine an association relationship between the index of the second SSB and the first RO based on the configuration information.

In a possible design, that the sending unit is configured to forward the at least one SSB includes: periodically forwarding an SSB with a first index. A spatial domain sending parameter used when the communication apparatus forwards an SSB with the first index in a $y^{th}$ period is the same as a spatial domain sending parameter used when the communication apparatus forwards an SSB with the first index in a $(y+M)^{th}$ period. Two or more SSBs in the at least one SSB have the first index, y and M are positive integers, and M$\geq$2.

In a possible design, that the sending unit is configured to forward the at least one SSB includes: periodically forwarding the at least one SSB. The at least one SSB includes an SSB with a first index. A spatial domain sending parameter used when the communication apparatus forwards an SSB with the first index in a $y^{th}$ period is the same as a spatial domain sending parameter used when the communication apparatus forwards an SSB with the first index in a $(y+M)^{th}$ period. Two or more SSBs in the at least one SSB have the first index, y and M are positive integers, and M$\geq$2.

In a possible design, the first index is the same as an index of the first SSB. For example, the SSB with the first index in the $y^{th}$ period is the first SSB, or the SSB with the first index in the $(y+M)^{th}$ period is the first SSB.

In a possible design, the first index is different from an index of the first SSB.

In a possible design, the sending unit is further configured to send first information to the network device. The first information indicates a value of M.

In a possible design, the receiving unit is further configured to receive indication information from the network device. The indication information includes information indicating m. The processing unit is configured to determine a target spatial domain parameter based on a spatial domain sending parameter for forwarding an SSB in an $x^{th}$ period, where x is an integer determined based on m.

In a possible design, that the processing unit is configured to determine a target spatial domain parameter based on a spatial domain sending parameter for forwarding an SSB in an $x^{th}$ period includes: determining the target spatial domain parameter based on a spatial domain sending parameter for forwarding any SSB in the $x^{th}$ period. The communication apparatus uses the same spatial domain sending parameter when forwarding all SSBs in the $x^{th}$ period.

In a possible design, x and m satisfy: $x=m+k*M+N$, where m, k, and N are integers.

In a possible design, the SSB in the $x^{th}$ period includes at least the first SSB.

In a possible design, at least one SSB in the $x^{th}$ period has a same index as the index of the first SSB.

In a possible design, the indication information further includes information indicating the first index. That the processing unit is configured to determine a target spatial domain parameter based on a spatial domain sending parameter for forwarding an SSB in an $x^{th}$ period includes: determining the target spatial domain parameter based on a spatial domain sending parameter for forwarding an SSB whose index is the first index in the $x^{th}$ period.

In a possible design, the SSB whose index is the first index in the $x^{th}$ period is the first SSB.

In a possible design, the first index is the same as an index of the first SSB.

In a possible design, the target spatial domain parameter includes at least one of the following: a target spatial domain sending parameter or a target spatial domain receiving parameter. The target spatial domain sending parameter is used by the communication apparatus to forward information from the network device to the terminal after the communication apparatus receives the information from the network device. The target spatial domain receiving parameter is used by the communication apparatus to receive information from the terminal before the communication apparatus forwards the information from the terminal to the network device.

According to a seventh aspect, a communication apparatus is provided. The communication apparatus may be the network device according to any one of the second aspect or the possible designs of the second aspect, or a chip implementing functions of the network device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

The communication apparatus includes a processing unit, a sending unit, and a receiving unit. The processing unit is configured to control the sending unit to send at least one SSB to a relay device. The processing unit is further configured to control the sending unit to send indication information to the relay device. The indication information includes information indicating m. The indication information is used by the relay device to determine a target spatial domain parameter based on a spatial domain sending parameter for forwarding an SSB in an $x^{th}$ period, where x is an integer determined based on m.

In a possible design, the indication information further includes information indicating a first index. That the indication information is used by the relay device to determine a target spatial domain parameter based on a spatial domain sending parameter for forwarding an SSB in an $x^{th}$ period includes: The indication information is used by the relay device to determine the target spatial domain parameter based on a spatial domain sending parameter for forwarding an SSB whose index is the first index in the $x^{th}$ period.

In a possible design, x and m satisfy: x=m+k*M+N, where m, k, and N are integers.

In a possible design, the receiving unit is configured to receive an uplink access signal from the relay device on a first random access channel occasion RO. The processing unit is further configured to determine a first SSB based on the first RO. The first SSB is one of the at least one SSB. The processing unit is further configured to determine m based on the first SSB, where m satisfies the following formula:

$$m = \mathrm{mod}(\frac{\mathrm{SFN}*\mathrm{T_{SFN}}+h*\mathrm{T_{SFN}} * a}{\mathrm{T_{SSB}}}, M)$$

mod() represents a modulo operator, SFN represents a system frame number of a system frame in which the first SSB is located, $\mathrm{T_{SFN}}$ represents a system frame length, h represents half-frame indication information included in the first SSB, a represents a coefficient, and $\mathrm{T_{SSB}}$ represents a periodicity length of the SSB.

In a possible design, that the processing unit is configured to determine a first SSB based on the first RO includes: determining the first SSB based on the first RO and a preset condition. The first SSB is an SSB that is in at least one second SSB and that is closest to the first RO in time domain, and the second SSB is an SSB that is in the at least one SSB and that satisfies the preset condition.

In a possible design, the preset condition includes: There is an association relationship between an index of the second SSB and the first RO; the second SSB is before the first RO; and a time interval between the second SSB and the first RO is greater than or equal to a first threshold.

In a possible design, the preset condition includes: There is an association relationship between an index of the second SSB and the first RO; the second SSB is before the first RO; and a time interval between the second SSB and the first RO is greater than a first threshold.

In a possible design, the receiving unit is further configured to receive first information from the relay device. The first information indicates a value of M.

In a possible design, the sending unit is further configured to send the position information to a terminal. The position information includes at least information about a position of the relay device, and the position information is used by the terminal to determine whether the terminal can be served by the relay device.

In a possible design, the sending unit is further configured to send threshold information to the terminal. The threshold information includes the first threshold, and the first threshold is used by the terminal to determine a RO for sending an uplink access signal.

In a possible design, the target spatial domain parameter includes at least one of the following: a target spatial domain sending parameter or a target spatial domain receiving parameter. The target spatial domain sending parameter is used by the relay device to forward information from the communication apparatus to the terminal after the relay device receives the information from the communication apparatus. The target spatial domain receiving parameter is used by the relay device to receive information from the terminal before the relay device forwards the information from the terminal to the communication apparatus.

According to an eighth aspect, a communication apparatus is provided. The communication apparatus may be the terminal according to any one of the third aspect or the possible designs of the third aspect, or a chip implementing functions of the terminal. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

The communication apparatus includes a processing unit, a sending unit, and a receiving unit. The receiving unit is configured to receive a first synchronization signal/physical broadcast channel block SSB from a relay device at a first moment. The processing unit is configured to determine a first random access channel occasion RO based on the first moment and the first SSB. An index of the first SSB is associated with the first RO. A moment corresponding to the first RO is not earlier than or later than a second moment, the second moment is later than the first moment, and there is an interval of a first threshold between the second moment and the first moment. The moment corresponding to the first RO is not later than or earlier than a third moment, the third moment is later than a fourth moment corresponding to a third SSB, and there is an interval of the first threshold between the third moment and the fourth moment. An index of the third SSB is the same as that of the first SSB, and a period in which the third SSB is located is a next period of a period in which the first SSB is located. The sending unit is configured to send an uplink access signal to the relay device on the first RO.

In a possible design, the receiving unit is further configured to receive position information from a network device. The position information includes at least information about a position of the relay device. The processing unit is configured to determine, by the device based on the position information, whether the device can be served by the relay device.

In a possible design, the receiving unit is further configured to receive threshold information from the network device. The threshold information includes the first threshold.

According to a ninth aspect, a communication apparatus is provided. The communication apparatus may be the relay device according to any one of the fourth aspect or the possible designs of the fourth aspect, or a chip implementing functions of the relay device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

The communication apparatus includes a processing unit, a sending unit, and a receiving unit. The processing unit is configured to control the receiving unit to receive at least two synchronization signal/physical broadcast channel blocks SSBs from a network device. The processing unit is further configured to control the sending unit to periodically forward an SSB with a first index. A spatial domain sending parameter used when the communication apparatus forwards an SSB with the first index in a $y^{th}$ period is the same as a spatial domain sending parameter used when the communication apparatus forwards an SSB with the first index in a $(y+M)^{th}$ period. Two or more of the at least two SSBs have the first index, y and M are positive integers, and $M \geq 2$.

In a possible design, the sending unit is further configured to send first information to the network device. The first information indicates a value of M.

According to a tenth aspect, a communication apparatus is provided. The communication apparatus may be the relay device according to any one of the fifth aspect or the possible designs of the fifth aspect, or a chip implementing functions of the relay device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

The communication apparatus includes a processing unit and a receiving unit. The receiving unit is configured to receive indication information from a network device. The indication information includes information indicating m. The processing unit is configured to determine a target spatial domain parameter based on a spatial domain sending parameter for forwarding an SSB in an $x^{th}$ period, where x is an integer determined based on m.

In a possible design, that the processing unit is configured to determine a target spatial domain parameter based on a spatial domain sending parameter for forwarding an SSB in an $x^{th}$ period includes: determining the target spatial domain parameter based on a spatial domain sending parameter for forwarding any SSB in the $x^{th}$ period. The communication apparatus uses the same spatial domain sending parameter when forwarding all SSBs in the $x^{th}$ period.

In a possible design, the indication information further includes information indicating a first index. That the processing unit is configured to determine a target spatial domain parameter based on a spatial domain sending parameter for forwarding an SSB in an $x^{th}$ period includes: determining the target spatial domain parameter based on a spatial domain sending parameter for forwarding an SSB whose index is the first index in the $x^{th}$ period.

In a possible design, x and m satisfy: $x = m + k*M + N$, where m, k, and N are integers.

In a possible design, the target spatial domain parameter includes at least one of the following: a target spatial domain sending parameter or a target spatial domain receiving parameter. The target spatial domain sending parameter is used by the communication apparatus to forward information from the network device to a terminal after the communication apparatus receives the information from the network device. The target spatial domain receiving parameter is used by the communication apparatus to receive information from the terminal before the communication apparatus forwards the information from the terminal to the network device.

According to an eleventh aspect, a communication apparatus is provided. The communication apparatus includes a processor and a memory. The memory is configured to store computer instructions. When the processor executes the instructions, the communication apparatus is enabled to perform the method performed by the relay device according to any one of the foregoing aspects or any possible design of any one of the foregoing aspects. The communication apparatus may be the relay device according to any one of the first aspect or the possible designs of the first aspect, the relay device according to any one of the fourth aspect or the possible designs of the fourth aspect, the relay device according to any one of the fifth aspect or the possible designs of the fifth aspect, or a chip implementing functions of the relay device.

According to a twelfth aspect, a communication apparatus is provided. The communication apparatus includes a processor. The processor is coupled to a memory, and is configured to read and execute instructions in the memory, so that the communication apparatus performs the method performed by the relay device according to any one of the foregoing aspects or any possible design of any one of the foregoing aspects. The communication apparatus may be the relay device according to any one of the first aspect or the possible designs of the first aspect, the relay device according to any one of the fourth aspect or the possible designs of the fourth aspect, the relay device according to any one of the fifth aspect or the possible designs of the fifth aspect, or a chip implementing functions of the relay device.

According to a thirteenth aspect, a chip is provided. The chip includes a processing circuit and an input/output interface. The input/output interface is configured to communicate with a module other than the chip. For example, the chip may be a chip implementing functions of the relay device according to any one of the first aspect or the possible designs of the first aspect. The processing circuit is configured to run a computer program or instructions, to implement the method according to any one of the first aspect or the possible designs of the first aspect. For another example, the chip may be a chip implementing functions of the relay device according to any one of the fourth aspect or the possible designs of the fourth aspect. The processing circuit is configured to run a computer program or instructions, to implement the method according to any one of the fourth aspect or the possible designs of the fourth aspect. In still another example, the chip may be a chip implementing functions of the relay device according to any one of the fifth aspect or the possible designs of the fifth aspect. The processing circuit is configured to run a computer program or instructions, to implement the method according to any one of the fifth aspect or the possible designs of the fifth aspect.

According to a fourteenth aspect, a communication apparatus is provided. The communication apparatus includes a processor and a memory. The memory is configured to store computer instructions. When the processor executes the instructions, the communication apparatus is enabled to perform the method performed by the network device according to any one of the foregoing aspects or any possible design of any one of the foregoing aspects. The communication apparatus may be the network device according to any one of the second aspect or the possible designs of the second aspect, or a chip implementing functions of the network device.

According to a fifteenth aspect, a communication apparatus is provided. The communication apparatus includes a processor. The processor is coupled to a memory, and is configured to read and execute instructions in the memory, so that the communication apparatus performs the method performed by the network device according to any one of the foregoing aspects or any possible design of any one of the foregoing aspects. The communication apparatus may be the network device according to any one of the second aspect or the possible designs of the second aspect, or a chip implementing functions of the network device.

According to a sixteenth aspect, a chip is provided. The chip includes a processing circuit and an input/output interface. The input/output interface is configured to communicate with a module other than the chip. For example, the chip may be a chip implementing functions of the network device according to any one of the second aspect or the possible designs of the second aspect. The processing circuit is configured to run a computer program or instructions, to implement the method according to any one of the second aspect or the possible designs of the second aspect.

According to a seventeenth aspect, a communication apparatus is provided. The communication apparatus includes a processor and a memory. The memory is configured to store computer instructions. When the processor executes the instructions, the communication apparatus is enabled to perform the method performed by the terminal according to any one of the foregoing aspects or any possible design of any one of the foregoing aspects. The communication apparatus may be the terminal according to any one of the third aspect or the possible designs of the third aspect, or a chip implementing functions of the terminal.

According to an eighteenth aspect, a communication apparatus is provided. The communication apparatus includes a processor. The processor is coupled to a memory, and is configured to read and execute instructions in the memory, so that the communication apparatus performs the method performed by the terminal according to any one of the foregoing aspects or any possible design of any one of the foregoing aspects. The communication apparatus may be the terminal according to any one of the third aspect or the possible designs of the third aspect, or a chip implementing functions of the terminal.

According to a nineteenth aspect, a chip is provided. The chip includes a processing circuit and an input/output interface. The input/output interface is configured to communicate with a module other than the chip. For example, the chip may be a chip implementing functions of the terminal according to any one of the third aspect or the possible designs of the third aspect. The processing circuit is configured to run a computer program or instructions, to implement the method according to any one of the third aspect or the possible designs of the third aspect.

According to a twentieth aspect, a computer-readable storage medium is provided. The computer-readable storage medium stores instructions. When the instructions are run on a computer, the computer may be enabled to perform the method according to any possible design of the foregoing aspects.

According to a twenty-first aspect, a computer program product including instructions is provided. When the computer program product runs on a computer, the computer is enabled to perform the method according to any possible design of the foregoing aspects.

According to a twenty-second aspect, a circuit system is provided. The circuit system includes a processing circuit, and the processing circuit is configured to perform the method according to any possible design of the foregoing aspects.

For technical effects brought by any design of the sixth aspect to the twentieth aspect, refer to beneficial effects in corresponding methods provided above. Details are not described herein again.

## BRIEF DESCRIPTION OF DRAWINGS

FIG. 1 is a diagram of an architecture of a communication system according to an embodiment of this application;
FIG. 2 is a working principle diagram of a relay device according to an embodiment of this application;
FIG. 3 is a diagram of an SSB according to an embodiment of this application;
FIG. 4 is a diagram of a sending manner of an SSB according to an embodiment of this application;
FIG. 5 is a diagram of an association between SSBs and random access channel occasions according to an embodiment of this application;
FIG. 6 is a diagram of another sending manner of an SSB according to an embodiment of this application;
FIG. 7 is a diagram of a sending manner of an uplink access signal according to an embodiment of this application;
FIG. 8 is a diagram of another sending manner of an uplink access signal according to an embodiment of this application;
FIG. 9 is a method flowchart of an uplink access method according to an embodiment of this application;
FIG. 10a is a diagram of still another sending manner of an SSB according to an embodiment of this application;
FIG. 10b is a diagram of yet another sending manner of an SSB according to an embodiment of this application;
FIG. 10c is a diagram of still yet another sending manner of an SSB according to an embodiment of this application;
FIG. 10d is a diagram of a transmission beam of a relay device according to an embodiment of this application;
FIG. 10e is a method flowchart of another uplink access method according to an embodiment of this application;
FIG. 10f is a diagram of a further sending manner of an SSB according to an embodiment of this application;
FIG. 11 is a method flowchart of still another uplink access method according to an embodiment of this application;
FIG. 12 is a diagram of still another sending manner of an uplink access signal according to an embodiment of this application;
FIG. 13a is a method flowchart of yet another uplink access method according to an embodiment of this application;
FIG. 13b is a method flowchart of still yet another uplink access method according to an embodiment of this application;
FIG. 14a is a method flowchart of a further uplink access method according to an embodiment of this application;
FIG. 14b is a method flowchart of a still further uplink access method according to an embodiment of this application;
FIG. 14c is a method flowchart of a yet further uplink access method according to an embodiment of this application;
FIG. 15 is a method flowchart of a still yet uplink access method according to an embodiment of this application;
FIG. 16 is a method flowchart of an even yet another uplink access method according to an embodiment of this application;
FIG. 17 is a diagram of a structure of a communication apparatus according to an embodiment of this application; and
FIG. 18 is a diagram of a structure of another communication apparatus according to an embodiment of this application.

## DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", and any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device. It should be noted that, in embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. In embodiments of this application, "more than two" includes two. The plurality may include two, or may include three, or may include more.

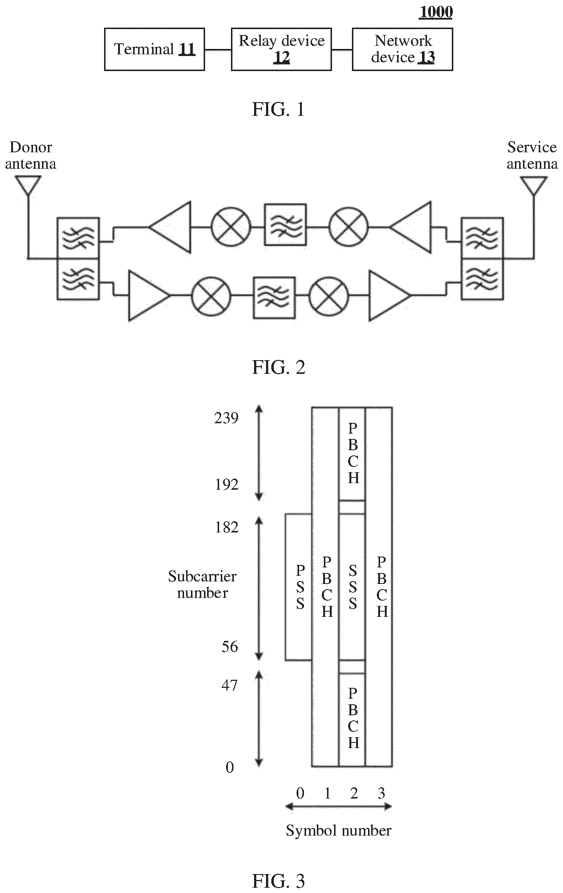

FIG. 1 is a diagram of an architecture of a communication system 1000 to which an embodiment of this application is applied. As shown in FIG. 1, the communication system 1000 includes a terminal 11, a relay device 12, and a network device 13.

The terminal 11 includes a device that provides a voice and/or data connectivity for a user. Specifically, the terminal includes a device that provides a voice for the user, includes a device that provides data connectivity for the user, or includes a device that provides a voice and data connectivity for the user. For example, the terminal may include a handheld device having a wireless connection function or a processing device connected to a wireless modem. The terminal may communicate with a core network through a radio access network (radio access network, RAN), and exchange a voice or data with the RAN. The terminal may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (or referred to as a "cellular" phone), a computer having a mobile terminal device, a portable, pocket-sized, handheld, or computer built-in mobile apparatus, or the like. For example, the terminal may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal may alternatively include a limited device, for example, a device with low power consumption, a device with a limited storage capability, or a device with a limited computing capability. For example, the terminal includes an information sensing device such as a barcode, radio frequency identification (radio frequency identification, RFID), a sensor, a global positioning system (global positioning system, GPS), or a laser scanner.

If the various terminals described above are located on a vehicle (for example, placed in the vehicle or installed in the vehicle), the terminals may all be considered as vehicle-mounted terminal devices. For example, the vehicle-mounted terminal device is also referred to as an on-board unit (on-board unit, OBU).

In embodiments of this application, an apparatus configured to implement a function of the terminal may be a terminal device, or may be an apparatus, for example, a chip system, that can support the terminal in implementing the function. The apparatus may be installed in the terminal. In embodiments of this application, the chip system may include a chip, or may include a chip and another discrete component. In the technical solutions provided in embodiments of this application, an example in which the apparatus configured to implement the function of the terminal is a terminal is used for description.

The relay device 12 is one or more devices added between the terminal 11 and the network device 13, and is responsible for forwarding a radio signal for one or more times. In other words, a radio signal of the network device 13 may reach the terminal 11 through a plurality of hops, and a radio signal of the terminal 11 may reach the network device 13 through a plurality of hops. A simple two-hop relay is used as an example. A link from the network device 13 to the terminal 11 is divided into a link from the network device 13 to the relay device 12 and a link from the relay device 12 to the terminal 11. The relay device 12 may amplify a received signal, to replace a poor-quality link with good-quality links, so that a higher link capacity or better coverage are achieved. For example, the relay device 12 may be a radio frequency (radio frequency, RF) repeater (RF repeater), a network controlled repeater (network controlled repeater, NCR), or a smart repeater. A specific technology and a specific device form that are used by the relay device are not limited in embodiments of this application.

For example, as shown in FIG. 2, the relay device receives a downlink signal of the network device 13 via a donor antenna (donor antenna). After filtering, amplification, and other operations are performed on the downlink signal, an amplified signal is finally forwarded to the terminal 11 via a service antenna (service antenna). This mode may be referred to as a downlink forwarding mode. In the downlink forwarding mode, a channel between the donor antenna and the service antenna may also be referred to as a downlink forwarding channel. In addition, the relay device may receive an uplink signal from the terminal 11 via the service antenna. After filtering, amplification, and other operations are performed on the uplink signal, an amplified signal is finally forwarded to the network device 13 via the donor antenna. This mode may be referred to as an uplink forwarding mode. In the uplink forwarding mode, a channel between the service antenna and the donor antenna may also be referred to as an uplink forwarding channel. Optionally, the uplink forwarding channel and the downlink forwarding channel may further include frequency mixers. As shown in FIG. 2, the uplink forwarding channel is used as an example. The relay device 12 first down-converts a high frequency signal to an intermediate frequency (or baseband) signal via one frequency mixer, performs filtering on the intermediate frequency (or baseband) signal, up-converts a filtered intermediate frequency (or baseband) signal back to a high frequency signal via one frequency mixer, and forwards the signal. Optionally, the uplink forwarding channel and the downlink forwarding channel further include a power amplifier, for example, a low-noise amplifier (low-noise amplifier, LNA). The donor antenna may also be referred to as a forward facing antenna. The service antenna is also referred to as a rearward facing antenna or a retransmission antenna.

The network device 13 may be an access point for wireless communication or wired communication, for example, a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, or an access node in a Wi-Fi system. The network device 13 may alternatively be a module or unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further implement a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in the 3rd generation partnership project (3rd generation partnership project, 3GPP). The network device may be a macro base station, or may be a micro base station, an indoor base station, or the like. A specific technology and a specific device form that are used by the network device are not limited in embodiments of this application.

To facilitate understanding of embodiments of this application, the following briefly describes related technologies in this application.

1. Beam

In a high frequency band, a path loss of a signal in space is extremely large. To overcome the large path loss, a sending device needs to send the signal by using a beamforming method, to concentrate energy of the signal in a direction. A receiving device may also amplify, by using the beamforming method, energy of a signal received in a direction. When a transmission beam direction of the sending device and a reception beam direction of the receiving device match a transmission path corresponding to a channel, the receiving device can receive a signal having high power/energy, or equivalently, a signal received by the receiving device has a high signal-to-noise ratio (signal-to-noise ratio, SNR) or a high signal to interference plus noise ratio (signal to interference plus noise ratio, SINR).

A technology for forming the beam may be a beamforming technology or another technology. The beamforming technology may be specifically a digital beamforming technology, an analog beamforming technology, a hybrid digital/analog beamforming technology, or the like.

The beam may be represented as a spatial domain filter (spatial domain filter), or referred to as a spatial filter (spatial filter), a spatial parameter (spatial parameter), or a spatial domain parameter. A beam for sending a signal may be referred to as a transmission beam (transmission beam, Tx beam), a spatial domain transmission filter (spatial domain transmission filter), a spatial transmission parameter (spatial transmission parameter), a spatial domain transmission parameter, or a spatial domain sending parameter. A beam for receiving a signal may be referred to as a reception beam (reception beam, Rx beam), a spatial domain receive filter (spatial domain receive filter), a spatial receiving parameter (spatial RX parameter), or a spatial domain receiving parameter. In embodiments of this application, the spatial domain parameter, the spatial domain sending parameter, and the spatial domain receiving parameter are used as examples for description. This is uniformly described herein, and details are not described below again.

2. SSB

In the network architecture shown in FIG. 1, a terminal may synchronize with a network device, obtain system information, and the like by receiving an SSB from the network device.

2-1. Composition of the SSB

In embodiments of this application, the SSB may include a primary synchronization signal (primary synchronization signal, PSS), a secondary synchronization signal (secondary synchronization signal, SSS), and a physical broadcast channel (physical broadcast channel, PBCH). As shown in FIG. 3, in time domain, one SSB occupies four orthogonal frequency division multiplexing (orthogonal frequency division multiplexing, OFDM) symbols (symbols): symbols 0 to 3. In frequency domain, one SSB occupies 20 resource blocks (resource blocks, RBs). One RB includes 12 subcarriers. In other words, one SSB occupies 240 subcarriers, and subcarrier numbers are 0 to 239. The PSS is located on 127 subcarriers in the middle of the symbol 0, and the SSS is located on 127 subcarriers in the middle of a symbol 2. To protect the PSS and the SSS, there are different guard subcarriers respectively. The guard subcarriers are not for carrying a signal. Subcarriers are separately reserved on two sides of the SSS as guard subcarriers. For example, in FIG. 3, blank areas on the two sides of the SSS are guard subcarriers. The PBCH occupies all subcarriers of the symbol 1 and the symbol 3, and occupies some subcarriers of the symbol 2. The PSS and the SSS may be used for time-frequency synchronization of the terminal, and the PBCH carries some basic configuration information of a network device (or a cell in which the network device is located) that sends the SSB.

2-2. SSB period (SSB period)

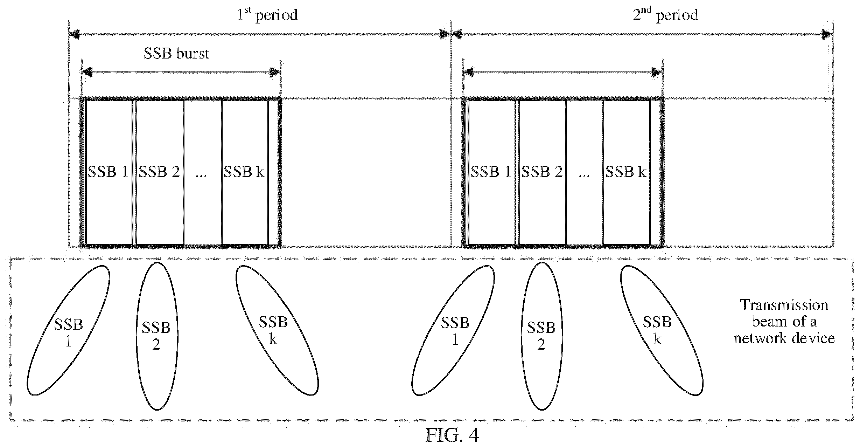

The network device periodically sends the SSB. One SSB period (SSB period) includes one SSB burst (SSB burst). In each SSB period, the SSB burst has a same relative position. Therefore, the SSB period may also be understood as an SSB burst period. One SSB burst includes a plurality of SSBs. Each SSB has one index. In one SSB period, indexes of different SSBs are different from each other. As shown in FIG. 4, a periodicity length of one SSB is denoted as $T_{SSB}$. A 1st SSB period includes one SSB burst, as shown by thick line blocks in FIG. 4. One SSB burst includes k SSBs, and indexes are respectively denoted as SSB 1, SSB 2, ..., and SSB k. A parameter k is a positive integer, and k≥2. In a 2nd SSB period, still one SSB burst is included, as shown by thick line blocks in FIG. 4. One SSB burst includes k SSBs, and indexes of the k SSBs are respectively the same as the indexes of the k SSBs in the 1st SSB period. In other words, the indexes are still SSB 1, SSB 2, ..., and SSB k. SSBs with a same index have a same relative position in different SSB bursts. Generally, the period length of the SSB is a fixed value, for example, 20 ms, unless the network device changes a sending configuration of the network device. In addition, the SSB period may also be described as a period of the SSB or a period. In embodiments of this application, for clear and brief descriptions, the period is used as an example for description. This is uniformly described herein, and details are not described below again. A period configuration of the SSB includes a periodicity length configuration of the SSB and an offset configuration of the SSB burst. The period configuration of the SSB may be determined by the terminal through measurement, or may be notified by the network device to the terminal by using indication information.

For the network device, the network device sends the SSB by using a spatial domain sending parameter. For different SSBs in a same period, the network device may send the SSBs by using different spatial domain sending parameters. For example, for the SSBs in the 1st period in FIG. 4, the network device sends SSB 1 by using a spatial domain sending parameter 1, the network device sends SSB 2 by using a spatial domain sending parameter 2, and the network device sends SSB k by using a spatial domain sending parameter k. Beam directions generated by the spatial domain sending parameter 1, the spatial domain sending parameter 2, and the spatial domain sending parameter k may be different, so that the network device covers terminals in different beam directions. For SSBs in an adjacent period, for example, the SSBs in the 2nd period in FIG. 4, the indexes are still SSB 1, SSB 2, ..., and SSB k. The network device sends SSB 1 by still using the spatial domain sending parameter 1, sends SSB 2 by still using spatial domain sending parameter 2, and sends SSB k by still using spatial domain sending parameter k. In other words, for SSBs with a same index in different periods, the network device sends the SSBs by using a same spatial domain sending parameter. Therefore, it may also be understood as that each SSB index corresponds to one spatial domain sending parameter.

For the terminal, the terminal may receive and detect these SSBs. If reference signal received power (reference signal received power, RSRP) of an SSB is greater than an RSRP threshold, and after successful demodulation and decoding, the terminal may first determine an index of the SSB, in other words, determine that the SSB is a specific SSB in a period. Then, the terminal determines configuration information of an initial control resource set and search space based on a master information block (master information block, MIB) in the SSB, so that the terminal can detect downlink control information (downlink control information, DCI). The DCI can be used to schedule a physical downlink shared channel (physical downlink shared channel, PDSCH). The PDSCH may carry a system information block (system information block, SIB). The SIB includes configuration information for initiating random access by the terminal. For details, refer to descriptions of a random access channel (random access channel, RACH) occasion (RACH occasion, RO).

It should be noted that the index in embodiments of this application may be understood as the index of the SSB, and the period in embodiments of this application may be understood as the period of the SSB.

3. Random access

A purpose of the random access is to enable a terminal to access a network and achieve uplink synchronization. A random access process may include a contention-based random access process and a non-contention-based random access process. The contention-based random access process mainly includes the following procedure.

Step 1: The terminal sends a random access preamble sequence at a specific time-frequency position. The random access preamble sequence is also referred to as a message 1 (message 1), an uplink access signal, or a random access signal. In embodiments of this application, the uplink access signal is used as an example for description.

Step 2: After obtaining the random access preamble sequence through detection, a network device feeds back a random access response to the terminal.

Step 3: The terminal sends a message 3 (message 3) to the network device. The message 3 carries identification information of the terminal, such as, a user equipment identifier (user equipment identifier, UE ID), a cell radio network temporary identifier (cell radio network temporary identifier, C-RNTI), or a random number, and is used for conflict resolution.

Step 4: The network device sends a message 4 (message 4) to the terminal, where the message 4 indicating a terminal that wins in the conflict resolution.

In the non-contention-based random access process, step 1 and step 2 in the foregoing procedure are included, in other words, step 3 and step 4 for the conflict resolution are not included.

4. RO

The RO is a time-frequency resource for transmitting an uplink access signal in a random access process, and belongs to an uplink resource.

Before random access, a network device notifies, by using a SIB, a terminal of configuration information related to a random access channel (random access channel, RACH). The configuration information includes information about a RO time-frequency resource, for example, frequency domain position information of the RO or time domain position information of the RO. For example, the frequency domain position information of the RO includes a quantity of ROs in a same time unit, a start frequency position of the RO, a frequency interval of the RO, and the like. The time domain position information of the RO includes a configuration period of a physical random access channel (physical random access channel, PRACH). For the configuration period of the PRACH, a system frame (system frame, SF) is usually used as a period. In other words, the configuration period indicates that one system frame including a RO appears at an interval of a specific quantity of system frames. In addition, the time domain position information of the RO further includes at least one of the following items.

A first item is a frame index, indicating a frame index including the RO.

A second item is a subframe index, indicating a subframe index including the RO.

A third item is a slot index, indicating a slot index including the RO.

A fourth item is a start symbol position. The start symbol position is a start symbol position of the RO in a subframe identified by the subframe index, or a start symbol position in a slot identified by the slot index.

Time-frequency position distribution of the RO may be obtained based on the frequency domain position information and the time domain position information of the RO. However, in a time division duplexing (time division duplexing, TDD) communication system, some ROs may be unavailable, and a valid RO satisfies a specific condition. For example, the RO does not include a downlink symbol, and does not overlap a symbol occupied by an SSB.

In addition, there is an association relationship between the RO and an index of the SSB, so that when the terminal initiates an uplink access signal on the RO, the network device can align a reception beam with the terminal by using a corresponding spatial domain receiving parameter. For example, the network device sends an SSB whose index is SSB 1 in a direction of a beam 1. When one terminal is in the direction of the beam 1, the terminal can receive the SSB whose index is SSB 1, and measure RSRP of the SSB. When the RSRP of the SSB satisfies a specific condition, an uplink access signal may be initiated on a RO associated with the index SSB 1. In addition, the network device may receive, by using the beam 1, the uplink access signal on the RO associated with SSB 1, to ensure that the received uplink access signal has high power/energy, and improve a random access success rate of the terminal.

It should be noted that the association relationship between the RO and the index of the SSB is implemented through mapping. When the index of the SSB is mapped to the RO, the index is mapped first in frequency domain and then in time domain. For example, the SIB further includes a parameter N. When N is less than 1, one index may be mapped to 1/N (an integer) consecutive ROs. The terminal maps an index to a valid RO first in frequency domain and then in time domain based on RO configuration information (such as the time domain position information of the RO and the frequency domain position information of the RO).

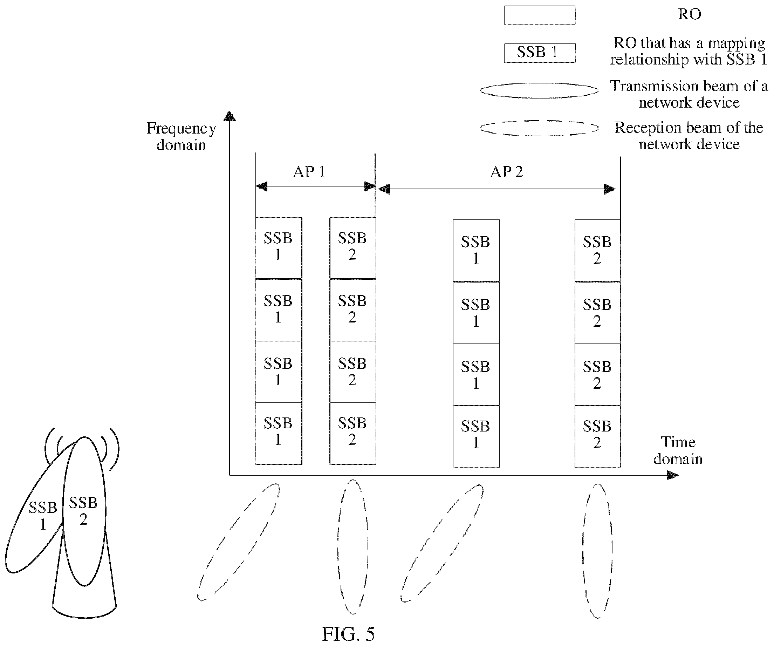

For example, FIG. 5 is used as an example. A quantity of ROs in one time unit is 4, and N=1/4. For one association period (association period, AP), there is an association relationship between four ROs in a 1st time unit and

an index SSB 1, and there is an association relationship between four ROs in a 2nd time unit and an index SSB 2. One AP includes one or more PRACH configuration periods. In one AP, each index is associated with at least one valid RO. In different APs, positions of valid ROs may be different. In this case, patterns of mapping relationships between indexes and valid ROs in different APs are different. One association pattern period (association pattern period, APP) includes one or more APs. A pattern of a mapping relationship between an index and a valid RO is repeated by using the APP as a period. For example, in FIG. 5, mapping patterns of indexes and ROs in an AP 1 and an AP 2 are different. Therefore, one APP includes two APs: the AP 1 and the AP 2. If an index of an SSB received by the terminal is SSB 1, the terminal may determine, based on the mapping relationship, the ROs associated with the index SSB 1, and send an uplink access signal on one RO associated with the index SSB 1.

It should be understood that, that the index of the SSB is mapped to the RO may also be understood as that there is the association relationship between the RO and the index of the SSB. The association relationship may be a positive or negative association. For example, when a RO is described, the RO may be described as a RO associated with an index. For another example, when an index is described, the index may be described as an index associated with a RO.

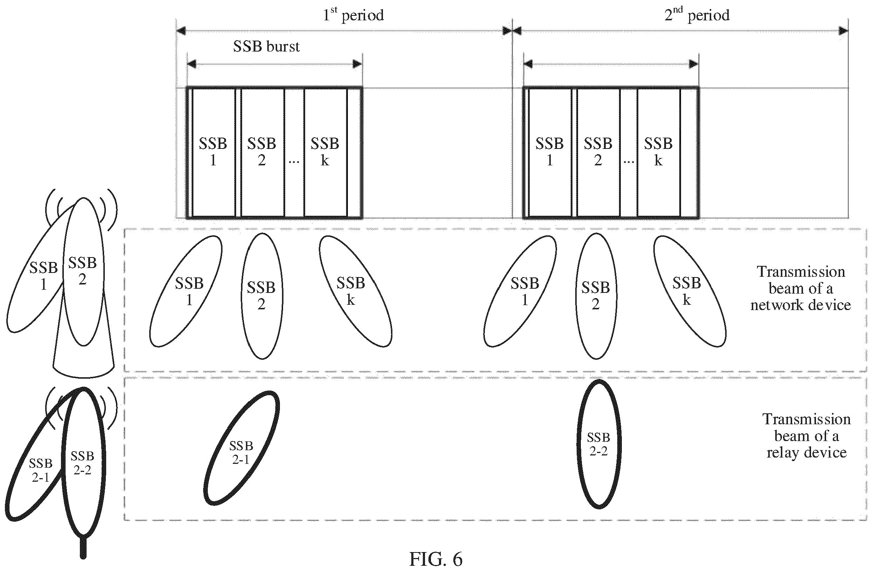

In the network architecture shown in FIG. 1, positions of a relay device and a network device are usually fixed. Therefore, a channel between the relay device and the network device is fixed. In other words, a reception beam used by the relay device to receive a downlink signal of the network device and a transmission beam used by the relay device to forward an uplink signal of a terminal to the network device are usually fixed. However, the terminal may keep moving, and the relay device serves different terminals. Therefore, the relay device continuously adjusts a transmission beam for forwarding the downlink signal to the terminal and a reception beam for receiving the uplink signal of the terminal. For some common downlink signals, such as SSBs, the relay device needs to forward the common downlink signals to a terminal in a coverage area of the relay device. To ensure coverage performance of the relay device, a possible method is as follows. For an SSB with an index, the relay device forwards the SSB to a direction in one period, and then forwards the SSB to another direction in a next period. It is assumed that the relay device totally has M beam directions for forwarding the SSB. After M periods, the relay device forwards SSBs having a same index to the M directions. As shown in FIG. 6, during downlink transmission, if the relay device is located in a coverage area of a transmission beam corresponding to SSB 2, the relay device may forward, to the terminal in the coverage area of the relay device, an SSB whose index is SSB 2 (or an SSB identified by the index SSB 2) and that is sent by the network device. For the SSB identified by the index SSB 2, in a 1st period, the relay device forwards the SSB to a beam direction identified by SSB 2-1, and in a 2nd period, the relay device forwards the SSB to a beam direction identified by SSB 2-2. FIG. 6 shows only forwarding, by the relay device, of the SSB whose index is SSB 2, and the relay device may also forward one or more SSBs of other indexes. For example, the relay device may also forward an SSB identified by an index SSB 1 and an SSB identified by an index SSB k. Spatial domain sending parameters used by the relay device to forward SSBs of different indexes in a same period may be the same or different.

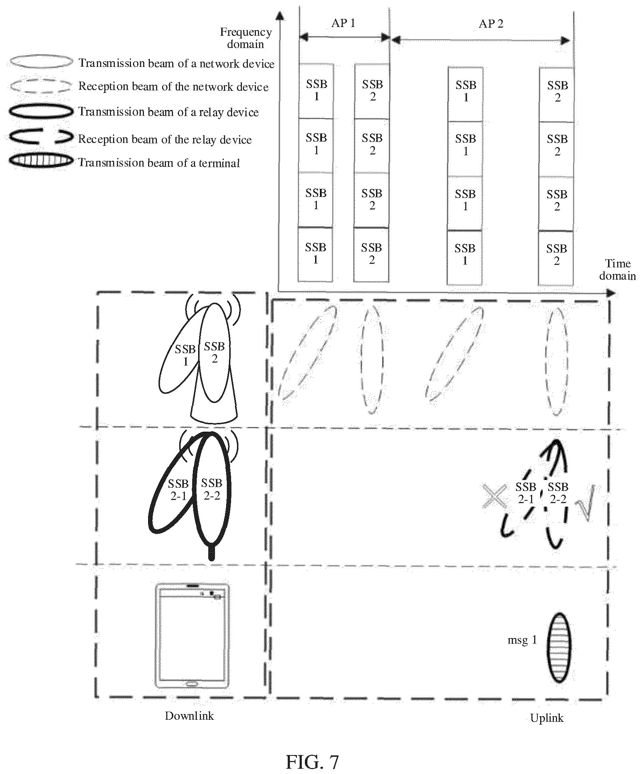

However, in the foregoing process, a random access process of the terminal is affected. Specific analysis is as follows. In a scenario without the relay device, the terminal determines, based on an index of a received SSB, one or more ROs associated with the index, and then selects one RO from the ROs associated with the index to send an uplink access signal. On the RO, an association relationship between the index and the RO can ensure that the network device determines a spatial domain receiving parameter on the associated RO based on a spatial domain sending parameter corresponding to the index, so that a beam is aligned with the terminal. However, after the relay device is introduced, the relay device uses, in different periods, different spatial domain sending parameters for SSBs identified by one SSB index. Therefore, due to the relay device, a one-to-one correspondence between the index of the SSB and a beam no longer exists. In this case, it cannot be ensured that a beam used by the relay device is aligned with the terminal. FIG. 7 shows a transmission process of an SSB. For a downlink transmission process in FIG. 7, refer to descriptions in FIG. 6. For a relay device, the relay device forwards only a radio frequency signal for the SSB. Therefore, most content carried by SSBs in two periods is the same. When a terminal is in a beam direction identified by SSB 2-2, the terminal receives an SSB transmitted in the beam direction identified by SSB 2-2, and determines that an index of the SSB is SSB 2. As shown in FIG. 7, the terminal determines, based on a SIB sent by a network device, a RO associated with the index SSB 2, and then sends an uplink access signal by using a RO associated with the index SSB 2. The relay device needs to perform uplink forwarding on the RO associated with the index SSB 2. For the relay device, to serve all terminals in a coverage area of the relay device, the relay device performs round robin of a reception beam on the RO associated with the index SSB 2. For example, on a 2nd column of ROs of an AP 2, the uplink access signal from the terminal may be received by using a reception beam identified by SSB 2-1, or the uplink access signal from the terminal may be received by using the reception beam identified by SSB2-2.

It is assumed that a terminal is located in a coverage area of a beam identified by SSB 2-2 of the relay device, and receives an SSB (where an index of the SSB is SSB 2) and configuration information of a SIB forwarded by the relay device. Therefore, the terminal determines one or more ROs corresponding to the index SSB 2. However, because the terminal does not know existence of the relay device, the terminal may randomly select one RO from the ROs corresponding to the index SSB 2, to send an uplink access signal, namely, a msg 1. FIG. 7 is used as an example. The terminal sends the uplink access signal on the 2nd column of ROs of the AP 2. For the relay device, the reception beam identified by SSB 2-1 cannot be aligned with the terminal, and the reception beam identified by SSB 2-2 can be aligned with the terminal. In addition, a specific reception beam that is used by the relay device and that is on the 2nd column of ROs of the AP 2 is uncertain. In this case, the reception beam of the relay device may not be aligned with the terminal. Consequently, energy of the uplink access signal received by the relay device is excessively weak, the uplink access signal forwarded by the relay device to the network device is also excessively weak, and the terminal fails to initiate uplink random access.

In addition, the network device may send a plurality of SSBs in a same beam direction in one period to resolve the foregoing technical problems. This mechanism may be referred to as an SSB sending pattern (pattern) extending mechanism. Details are described as follows.

The network device sends, in one period, a plurality of SSBs to a beam direction in which the relay device is located. Correspondingly, the relay device may receive, in one period, the plurality of SSBs from the network device in a same reception beam direction. Indexes of the plurality of SSBs are different, and the relay device may forward the plurality of SSBs in one period by using different spatial domain sending parameters.

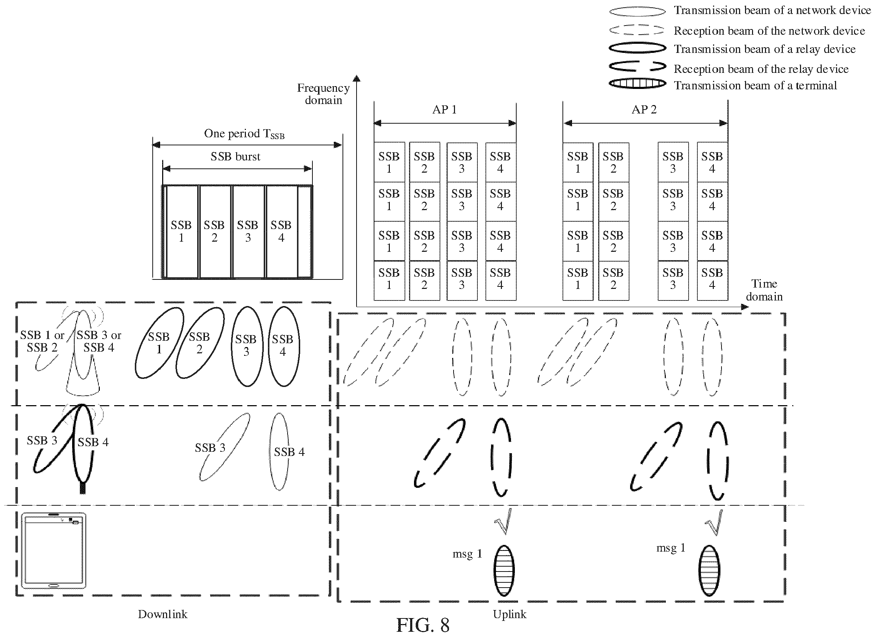

FIG. 8 is used as an example. One period includes four SSBs, and indexes of the four SSBs are respectively SSB 1, SSB 2, SSB 3, and SSB 4. In a downlink transmission process, a network device sends two SSBs in a same beam direction. Indexes of the two SSBs are respectively SSB 1 and SSB 2. The network device sends the other two SSBs in another beam direction. Indexes of the two SSBs are respectively SSB 3 and SSB 4. It is assumed that a relay device forwards only SSBs whose indexes are SSB 3 and SSB 4 (where because SSBs whose indexes are SSB 1 and SSB 2 are not aligned with a direction of the relay device, energy of signals of these SSBs received by the relay device is weak, and even if these SSBs are forwarded, an effect is poor). For the relay device, the relay device may forward, in one period, the SSBs whose indexes are SSB 3 and SSB 4 to a terminal by using beams in different directions. In addition, a same forwarding beam (a transmission beam for forwarding an SSB to the terminal) is used in different periods. To be specific, for an SSB with any index, the relay device has a determined forwarding beam corresponding to the SSB with the index. This is different from a solution in FIG. 7 in which the relay device has a plurality of forwarding beams corresponding to an SSB with one index. For example, for the index SSB 2, forwarding beams of the relay device include a transmission beam identified by SSB 2-1 and a transmission beam identified by SSB 2-2.

For the terminal, SSBs received by terminals in different beam directions of the relay device also have different indexes, and ROs associated with different indexes are also different. After the terminal initiates an uplink access signal on a RO, a reception beam used by the relay device on the RO is uniquely determined. In other words, the reception beam is determined based on a transmission beam corresponding to an SSB index associated with the RO. FIG. 8 is used as an example. The terminal sends an uplink access signal on a 4th column of ROs of an AP 1 or a 4th column of ROs of an AP 2. Regardless of a position of a RO selected by the terminal, an SSB index corresponding to the RO is determined, and the relay device has one determined forwarding beam corresponding to SSBs with a same index. Therefore, the relay device determines a reception beam on the RO based on a forwarding beam of an SSB identified by the index associated with the RO, so that the reception beam of the relay device can also be aligned with the terminal, to receive the uplink access signal. In addition, the received uplink access signal has high RSRP or energy, so that a success rate of initiating random access by the terminal is improved.

Although the foregoing problems can be resolved by using the SSB sending pattern (pattern) extending mechanism, the network device additionally sends the SSB. Consequently, a cell capacity is reduced, and available uplink resources are also reduced. In addition, some terminals do not support the SSB sending pattern (pattern) extending mechanism.

In view of this, embodiments of this application provide an uplink access method. The method may be applied to the communication system in FIG. 1. In embodiments of this application, the period is the period of the SSB. The index of the SSB is denoted as SSB i, where i is a positive integer, for example, SSB 1, SSB 2, or SSB 3. In embodiments of this application, to distinguish between different SSBs, the SSBs are denoted as a first SSB, a second SSB, a third SSB, and the like. In the following embodiments of this application, names of messages between network elements, names of parameters in messages, or the like are merely examples, and there may be other names during specific implementation. This is uniformly described herein, and details are not described below again.

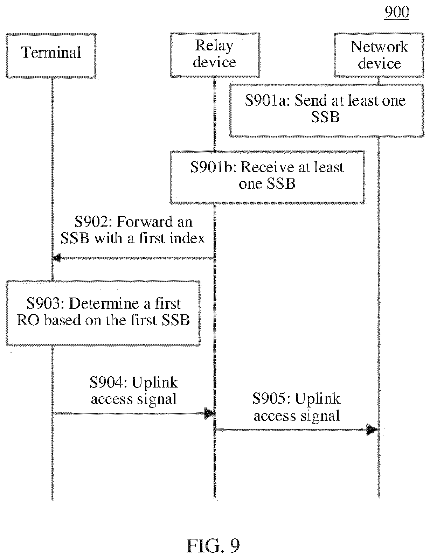

With reference to FIG. 9 to FIG. 16, the following describes in detail the uplink access method provided in embodiments of this application.

In the uplink access method provided in embodiments of this application, a relay device receives at least one SSB from a network device, and forwards the at least one SSB. Each of the at least one SSB has one index, and each index is associated with a plurality of ROs. The relay device uses one spatial domain sending parameter when forwarding each of the at least one SSB. It may also be understood as that the relay device forwards each of the at least one SSB to one beam direction, and different SSBs may be forwarded to a same beam direction or different beam directions. Then, the relay device receives an uplink access signal from a terminal on a first RO by using a first spatial domain receiving parameter. The first RO is one of the ROs associated with the index of each of the at least one SSB, the first spatial domain receiving parameter is determined based on a first spatial domain sending parameter used by the relay device to forward a first SSB, the first SSB is an SSB that is in at least one second SSB and that is closest to the first RO in time domain, and the second SSB is an SSB that is in the at least one SSB and that satisfies a preset condition. In this way, the relay device determines the second SSB from the forwarded at least one SSB by using the preset condition, and then determines the first SSB with reference to an association relationship between each second SSB and the first RO in time domain. The first SSB may be understood as an SSB received by the terminal. The terminal initiates the uplink access signal after receiving the first SSB. Because the first spatial domain sending parameter corresponding to the first SSB is aligned with the terminal, the relay device determines the first spatial domain receiving parameter based on the first spatial domain sending parameter, and the relay device can align a reception beam direction with the terminal by using the first spatial domain receiving parameter. Therefore, the relay device receives the uplink access signal of the terminal on the first RO, to reduce a phenomenon of an uplink access failure. In addition, in embodiments of this application, the network device, the relay device, and the terminal do not need to extend a sending pattern of the SSB, and impact on the device is small.

As shown in FIG. 9, an uplink access method 900 provided in an embodiment of this application includes the following steps.

S901a: A network device sends at least one SSB.

It should be understood that the network device sends the SSB in a broadcast manner. A device other than the network device may receive the SSB. The network device may send the SSB in a beam manner. For a specific sending manner, refer to the foregoing descriptions of the SSB and FIG. 4.

S901b: A relay device receives the at least one SSB from the network device.

The SSB in S901b may include SSBs of different indexes in a same period, or may include SSBs in different periods. For details, refer to descriptions in FIG. 4. Details are not described herein again.

S902: The relay device periodically forwards an SSB with a first index. A spatial domain sending parameter used when the relay device forwards an SSB with the first index in a $y^{th}$ period is the same as a spatial domain sending parameter used when the relay device forwards an SSB with the first index in a $(y+M)^{th}$ period. Two or more SSBs in the at least one SSB have the first index, y and M are positive integers, and $M \geq 2$. Correspondingly, a terminal receives the SSB with the first index forwarded by the relay device.

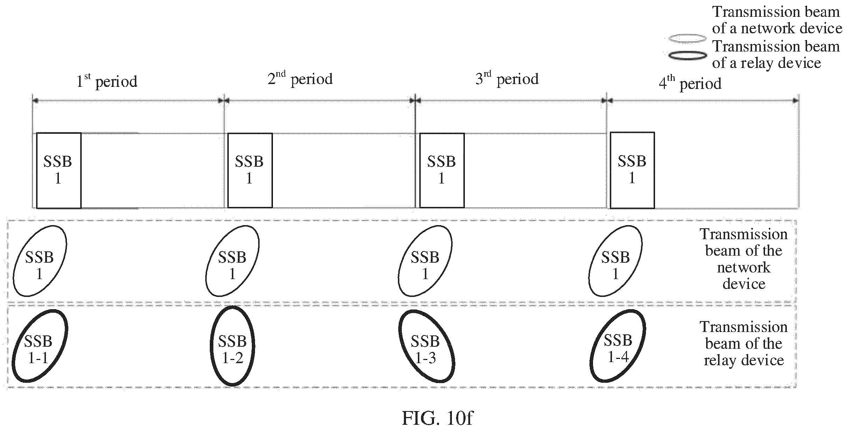

The foregoing process may be understood as that the relay device uses, in each SSB period, one spatial domain sending parameter to forward the SSB with the first index. Spatial domain parameters used in different SSB periods may be the same or different. However, spatial domain sending parameters corresponding to SSBs change based on a large period of $M*T_{SSB}$, where $T_{SSB}$ is a periodicity length of the SSB, and M may be understood as a quantity of spatial domain sending parameters used by the relay device to forward the SSB with the first index. As shown in FIG. 10f, the first index is an index SSB 1, and the relay device forwards SSBs whose indexes are SSB 1 by using M spatial domain sending parameters, where M=3. The relay device forwards the SSBs whose indexes are SSB 1 by using spatial domain sending parameters 1-1, 1-2, and 1-3 respectively in $1^{st}$, $2^{nd}$, and $3^{rd}$ periods. When y=1, the SSB whose index is SSB 1 is forwarded by using the spatial domain sending parameter 1-1 in each of the $1^{st}$ period and a $4^{th}$ period. By analogy, in the $4^{th}$ period, a $5^{th}$ period, and a $6^{th}$ period, the relay device uses the spatial domain sending parameters 1-1, 1-2, and 1-3 respectively to forward SSBs whose indexes are SSB 1, ..., and the like. That is, the spatial domain sending parameters corresponding to these SSBs change based on a large period of $3*T_{SSB}$.

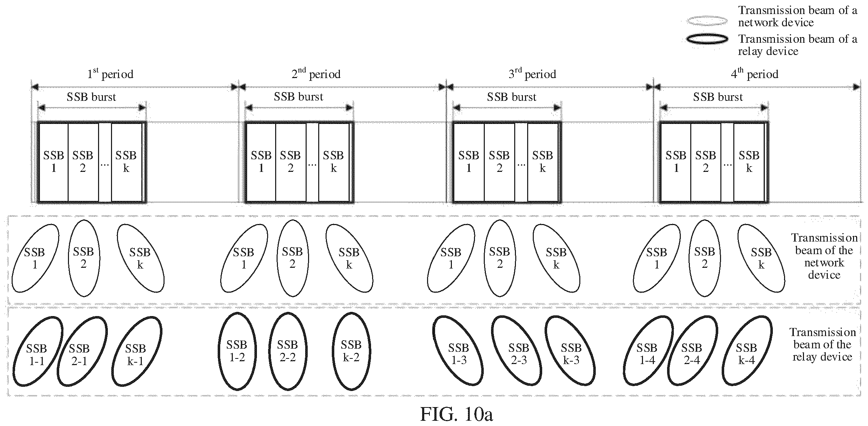

It should be noted that, in this embodiment of this application, the spatial domain sending parameter used when the relay device forwards the SSB with the first index in the $y^{th}$ period may be the same as or different from the spatial domain sending parameter used when the relay device forwards the SSB with the first index in the $(y+1)^{th}$ period. This is not limited in this embodiment of this application. Refer to FIG. 10a. When a value of y is 1, the index SSB 1 is still used as an example. In a $1^{st}$ period, a spatial domain sending parameter used when the relay device forwards an SSB identified by the index SSB1 is a spatial domain sending parameter 1-1. In a $2^{nd}$ period, a spatial domain sending parameter used when the relay device forwards an SSB identified by the index SSB 1 is a spatial domain sending parameter 1-2. The spatial domain sending parameter 1-1 is different from the spatial domain sending parameter 1-2. Therefore, a beam direction generated by the spatial domain sending parameter 1-1 is different from a beam direction generated by the spatial domain sending parameter 1-2, as shown by thick-solid-line ellipses identified by SSB 1-1 and SSB 1-2 in FIG. 10a.

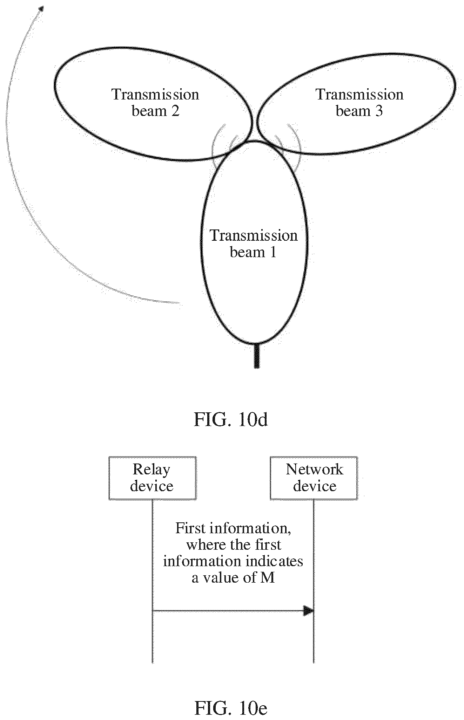

It should be understood that a value of M may be determined based on a quantity of beams sent by the relay device to complete omnidirectional coverage once. FIG. 10d is used as an example. The relay device sends three beams in a counterclockwise direction to complete omnidirectional coverage once. In this case, the value of M is 3. For the relay device, the relay device may report the value of M to the network device. In other words, as shown in FIG. 10e, the relay device performs the following step.

The relay device sends first information to the network device. Correspondingly, the network device receives the first information from the relay device.

The first information indicates the value of M. For example, the first information may directly indicate the value of M. For example, the first information includes the parameter M. The first information may alternatively indirectly indicate the value of M. For example, the first information indicates the value of M by using a bit value. For example, there is a specific mapping relationship between the bit value and the value of M, as shown in Table 1.

**Table 1**

| Bit value | Value of M |
|---|---|
| 00 | 3 |
| 01 | 6 |
| ... | ... |

With reference to Table 1, when the first information is carried in two bits, if a bit value of the two bits is 00, it means that the first information indicates that the value of M is 3. If a bit value of the two bits is 01, it means that the first information indicates that the value of M is 6.

It should be understood that Table 1 herein provides only one mapping relationship between the bit value and the value of M. Other mapping relationships are similar, and details are not described herein again.

It should be understood that the first information may alternatively indicate the value of M in other manners. Details are not described herein again.

It should be noted that transmission of the first information is an optional step. If the value of M is preconfigured, the network device can also obtain the value of M. In this case, the relay device may not perform the foregoing step (to be specific, the step of sending the first information). On the contrary, if the value of M is not preconfigured, in this case, the relay device may perform the foregoing step (to be specific, the step of sending the first information), so that the network device learns of the value of M. Alternatively, the network device may directly indicate M, and the relay device determines the value of M based on the indication of the network device.

It should be understood that, in S902, only the first index is described. In an actual scenario, the relay device may forward only one SSB with an index (namely, the first index), or may forward a plurality of SSBs with indexes. When the plurality of SSBs with indexes are forwarded, for a procedure of forwarding each of the SSBs with indexes, refer to a procedure of forwarding the SSB with the first index. In a same SSB period, the relay device may forward SSBs with different indexes by using a same spatial domain sending parameter or different spatial domain sending parameters.

The following describes, by using the following Example 1 and Example 2, a scenario of forwarding the plurality of SSBs with indexes.

Example 1: Spatial domain sending parameters used when the relay device forwards the SSBs with different indexes in the same period are the same.

Refer to FIG. 10a. k SSBs in the 1st period are used as an example. Indexes of SSBs in the period include SSB 1, SSB 2, SSB 3, ..., and SSB k. The relay device forwards, by using a spatial domain sending parameter 1-1, an SSB identified by the index SSB 1, forwards, by using a spatial domain sending parameter 2-1, an SSB identified by the index SSB 2, forwards, by using a spatial domain sending parameter 3-1, an SSB identified by the index SSB 3, ..., and forwards, by using a spatial domain sending parameter k-1, an SSB identified by the index SSB k. k spatial domain sending parameters (to be specific, the spatial domain sending parameter 1-1, the spatial domain sending parameter 2-1, the spatial domain sending parameter 3-1, ..., and the spatial domain sending parameter k-1) in the 1st period are the same. Therefore, beam directions generated by the k spatial domain sending parameters are the same, as shown by thick-solid-line ellipses identified by SSB 1-1, SSB 2-1, and SSB k-1 in FIG. 10a.

Example 2: Spatial domain sending parameters used when the relay device forwards the SSBs with different indexes in the same period and forwards at least two SSBs with indexes are different.

In a first case of Example 2, the spatial domain sending parameters used when the relay device forwards the SSBs with different indexes in the same period are different.

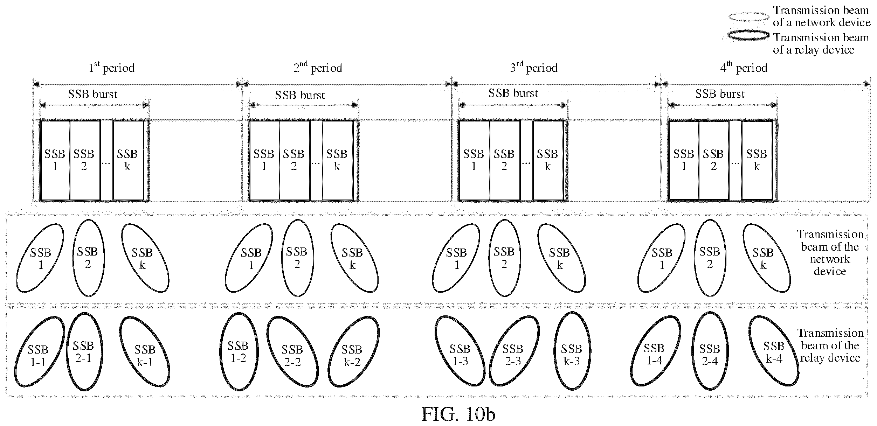

Refer to FIG. 10b. k SSBs in a 1st period are used as an example. Indexes of SSBs in the period still include SSB 1, SSB 2, SSB 3, ..., and SSB k. The relay device forwards, by using a spatial domain sending parameter 1-1, an SSB identified by the index SSB 1, forwards, by using a spatial domain sending parameter 2-1, an SSB identified by the index SSB 2, forwards, by using a spatial domain sending parameter 3-1, an SSB identified by the index SSB 3, ..., and forwards, by using a spatial domain sending parameter k-1, an SSB identified by the index SSB k. k spatial domain sending parameters (to be specific, the spatial domain sending parameter 1-1, the spatial domain sending parameter 2-1, the spatial domain sending parameter 3-1, ..., and the spatial domain sending parameter k-1) in the 1st period are different from each other. Therefore, beam directions generated by the k spatial domain sending parameters are different from each other, as shown by thick-solid-line ellipses identified by SSB 1-1, SSB 2-1, and SSB k-1 in FIG. 10b.

In a second case of Example 2, spatial domain sending parameters used when the relay device forwards some SSBs with indexes in a same period are different from each other, and spatial domain sending parameters used when the relay device forwards the remaining SSBs with indexes in the period are the same.

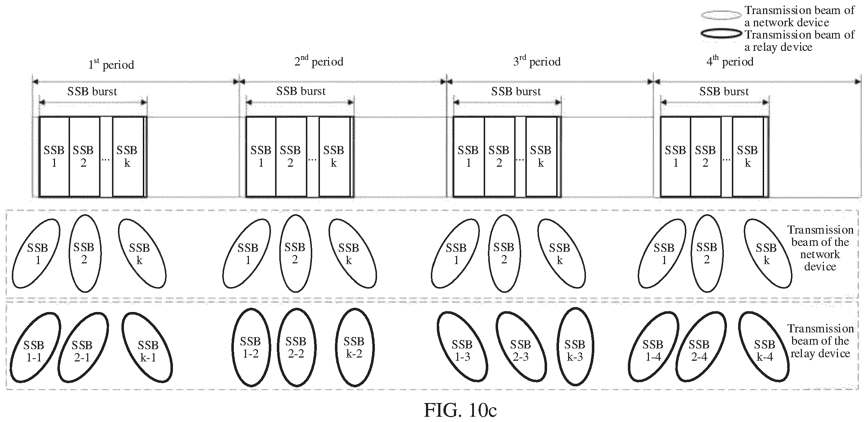

Refer to FIG. 10c. k SSBs in a 1st period are used as an example. Indexes of SSBs in the period still include SSB 1, SSB 2, SSB 3, ..., and SSB k. The relay device forwards, by using a spatial domain sending parameter 1-1, an SSB identified by the index SSB 1, forwards, by using a spatial domain sending parameter 2-1, an SSB identified by the index SSB 2, forwards, by using a spatial domain sending parameter 3-1, an SSB identified by the index SSB 3, ..., and forwards, by using a spatial domain sending parameter k-1, an SSB identified by the index SSB k. At least two parameters in k spatial domain sending parameters (to be specific, the spatial domain sending parameter 1-1, the spatial domain sending parameter 2-1, the spatial domain sending parameter 3-1, ..., and the spatial domain sending parameter k-1) in the 1st period are different. For example, the spatial domain sending parameter 1-1 is the same as the spatial domain sending parameter 2-1, and the spatial domain sending parameter 2-1 is different from the spatial domain sending parameter k-1. Therefore, there are at least two beam directions generated by the k spatial domain sending parameters, as shown by thick-solid-line ellipses identified by SSB 1-1, SSB 2-1, and SSB k-1 in FIG. 10c.

It should be noted that, in FIG. 10a, FIG. 10b, and FIG. 10c in embodiments of this application, a manner of denoting the spatial domain sending parameters is described as follows. A spatial domain sending parameter may be denoted as a spatial domain sending parameter i-tn, where i corresponds to an index of an SSB, and tn represents a $(tn)^{th}$ period. FIG. 10a is used as an example. The spatial domain sending parameter 2-1 represents a spatial domain sending parameter for forwarding the SSB whose index is SSB 2 in the 1st period. The spatial domain sending parameter k-1 represents a spatial domain sending parameter for forwarding the SSB whose index is SSB k in the 1st period.

Similarly, in FIG. 10a, FIG. 10b, and FIG. 10c in embodiments of this application, a manner of denoting an SSB is described as follows. An SSB may be denoted as SSB i-tn, indicating an SSB whose index is SSB in a $(tn)^{th}$ period, where i represents the SSB whose index is SSB i in one period, and tn indicates the $(tn)^{th}$ period. FIG. 10a is still used as an example. SSB 2-1 represents the SSB whose index is SSB 2 in the 1st period. SSB k-1 represents the SSB whose index is SSB k in the 1st period. It should be understood that the foregoing manner of denoting the SSB is different from an index of the SSB. In the manner of denoting the SSB, both information about a period and information about the index are included.

For the relay device, the relay device performs S902 to forward the SSB. For the SSB received by the relay device in S901b, each SSB has one index, and each index is associated with a RO.

For the terminal, after receiving the SSB from the relay device, the terminal may receive and detect the SSB. If RSRP of an SSB is greater than an RSRP threshold, the terminal initiates an uplink access signal on one RO associated with an index of the SSB. In the following descriptions, an SSB whose RSRP is greater than the RSRP threshold is denoted as a first SSB, and a processing process of the terminal is described. The terminal performs S903 and S904.

S903: The terminal determines the first RO based on the first SSB.

For example, the terminal determines, based on an index of the first SSB, one of one or more ROs associated with the index as the first RO. In other words, the index of the first SSB is associated with the first RO. For example, the index of the first SSB may be the first index in S902.

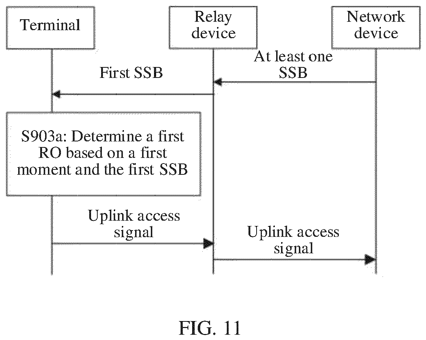

For example, as shown in FIG. 11, S903 includes S903a.

S903a: The terminal determines the first RO based on a first moment and the first SSB.

The first RO satisfies a first preset condition, a second preset condition, a third preset condition, or a fourth preset condition. The four preset conditions are described as follows.

The first preset condition includes the following two items (in other words, the first preset condition is satisfied only when both of the two items are satisfied).

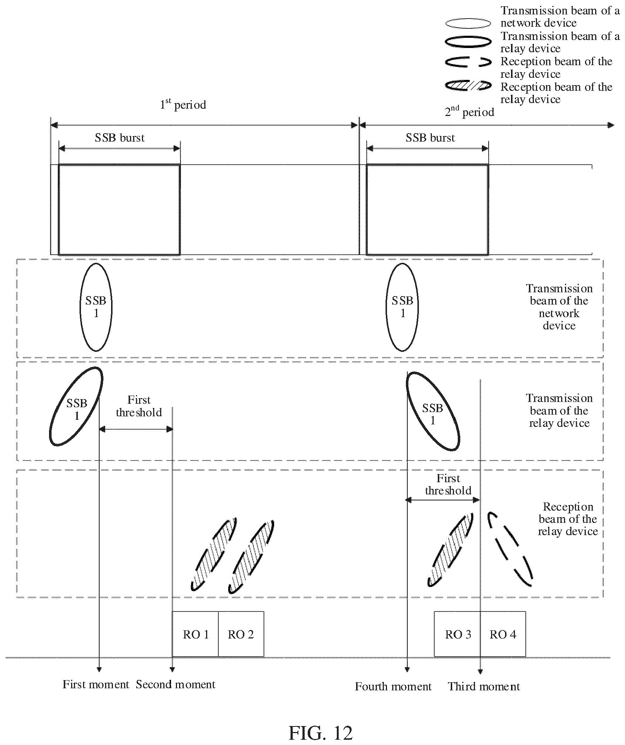

Preset condition a1: A moment corresponding to the first RO is not earlier than a second moment. The second moment is later than the first moment, and there is an interval of a first threshold between the second moment and the first moment. For example, as shown in FIG. 12, the first SSB is an SSB identified by an index SSB 1 in a 1st period. The first moment may be an end moment or a start moment, in time domain, of a resource occupied by the SSB identified by the index SSB 1 in the 1st period, as shown in FIG. 12. The moment corresponding to the first RO may be understood as all moments corresponding to the first RO. In other words, a start moment or an end moment of a resource occupied by the first RO in time domain is not earlier than the second moment, as shown in FIG. 12.

Preset condition a2: The moment corresponding to the first RO is not later than a third moment. The third moment is later than a fourth moment corresponding to a third SSB, and there is an interval of the first threshold between the third moment and the fourth moment. An index of the third SSB is the same as that of the first SSB, and a period in which the third SSB is located is a next period of a period in which the first SSB is located. FIG. 12 is still used as an example. The third SSB is an SSB identified by an index SSB 1 in a 2nd period. The fourth moment may be a start moment or an end moment, in time domain, of a resource occupied by the SSB identified by the index SSB 1 in the 2nd period. In other words, the start moment or the end moment of the resource occupied by the first RO in time domain is not later than the third moment, as shown in FIG. 12.

In other words, the first RO is a RO between the second moment (including the second moment) and the third moment (including the third moment). FIG. 12 is still used as an example. ROs satisfying a preset condition A include a RO 1, a RO 2, and a RO 3. Therefore, the first RO may be one of the RO 1, the RO 2, and the RO 3.

The second preset condition includes the following two items (in other words, the second preset condition is satisfied only when both of the two items are satisfied).

Preset condition b1: A moment corresponding to the first RO is later than a second moment. For the moment corresponding to the first RO and the second moment, refer to the preset condition a1. Details are not described herein again. In other words, a start moment or an end moment of a resource occupied by the first RO in time domain is later than the second moment.

Preset condition b2: The moment corresponding to the first RO is not later than a third moment. For the third moment, refer to the preset condition a2. Details are not described herein again. In other words, the start moment or the end moment of the resource occupied by the first RO in time domain is not later than the third moment.

In other words, the first RO is a RO between the second moment (excluding the second moment) and the third moment (including the third moment).

The third preset condition includes the following two items (in other words, the third preset condition is satisfied only when both of the two items are satisfied).

Preset condition c1: A moment corresponding to the first RO is later than a second moment. For the moment corresponding to the first RO and the second moment, refer to the preset condition a1. Details are not described herein again. In other words, a start moment or an end moment of a resource occupied by the first RO in time domain is later than the second moment.

Preset condition c2: The moment corresponding to the first RO is earlier than a third moment. For the third moment, refer to the preset condition a2. Details are not described herein again. In other words, the start moment or the end moment of the resource occupied by the first RO in time domain is earlier than the third moment.

In other words, the first RO is a RO between the second moment (excluding the second moment) and the third moment (excluding the third moment).

The fourth preset condition includes the following two items (in other words, the fourth preset condition is satisfied only when both of the two items are satisfied).

Preset condition d1: A moment corresponding to the first RO is not earlier than a second moment. For the moment corresponding to the first RO and the second moment, refer to the preset condition a1. Details are not described herein again. In other words, a start moment or an end moment of a resource occupied by the first RO in time domain is not earlier than the second moment.

Preset condition d2: The moment corresponding to the first RO is earlier than a third moment. For the third moment, refer to the preset condition a2. Details are not described herein again. In other words, the start moment or the end moment of the resource occupied by the first RO in time domain is earlier than the third moment.

In other words, the first RO is a RO between the second moment (including the second moment) and the third moment (excluding the third moment).

It should be understood that, in this embodiment of this application, a system frame carrying an SSB may also represent time, and a time-frequency resource corresponding to a RO may also represent time. Therefore, the foregoing preset conditions have equivalent replacement descriptions.

Descriptions of the first preset condition may be replaced with those of a fifth preset condition. The fifth preset condition includes the following two items (in other words, the fifth preset condition is satisfied only when both of the two items are satisfied).

Preset condition e1: The first RO is not earlier than a second moment. The second moment is later than the first SSB, and there is an interval of a first threshold between the second moment and the first SSB.

Preset condition e2: The first RO is not later than a third moment. The third moment is later than a third SSB, and there is an interval of the first threshold between the third moment and the third SSB. An index of a second SSB is the same as that of the first SSB, and a period in which the second SSB is located is a next period of a period in which the first SSB is located.

Descriptions of the second preset condition may be replaced with those of a sixth preset condition. The sixth preset condition includes the following two items (in other words, the sixth preset condition is satisfied only when both of the two items are satisfied).

Preset condition f 1: The first RO is later than a second moment. For the second moment, refer to the preset condition e1. Details are not described herein again.

Preset condition f2: The first RO is not later than a third moment. For the third moment, refer to the preset condition e2. Details are not described herein again.

Descriptions of the third preset condition may be replaced with those of a seventh preset condition. The seventh preset condition includes the following two items (in other words, the seventh preset condition is satisfied only when both of the two items are satisfied).

Preset condition g 1: The first RO is later than a second moment. For the second moment, refer to the preset condition e1. Details are not described herein again.

Preset condition g2: The first RO is earlier than a third moment. For the third moment, refer to the preset condition e2. Details are not described herein again.

Descriptions of the fourth preset condition may be replaced with those of an eighth preset condition. The eighth preset condition includes the following two items (in other words, the eighth preset condition is satisfied only when both of the two items are satisfied).

Preset condition h1: The first RO is not earlier than a second moment. For the second moment, refer to the preset condition e1. Details are not described herein again.

Preset condition h2: The first RO is earlier than a third moment. For the third moment, refer to the preset condition e2. Details are not described herein again.

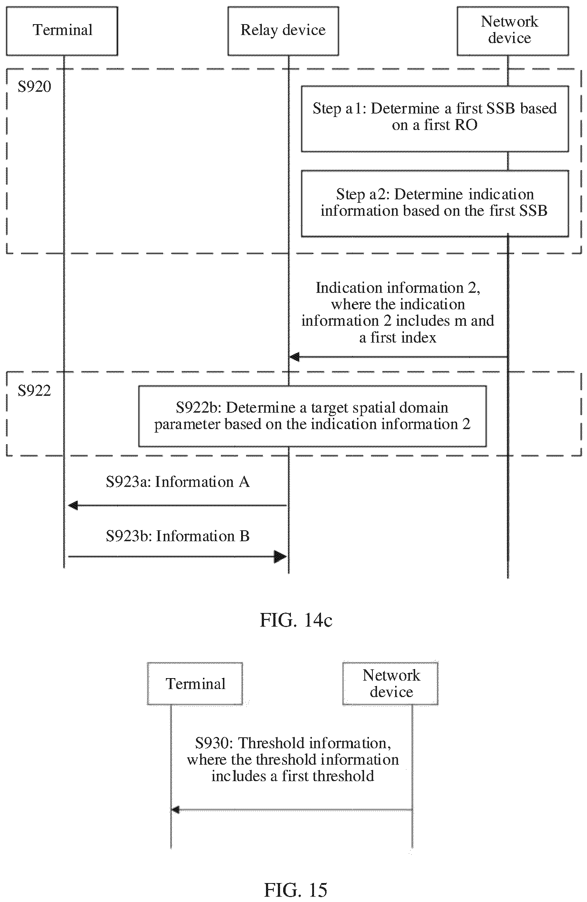

It should be noted that, in this embodiment of this application, the first threshold is described as follows. For the terminal, after obtaining one SSB through detection, the terminal processes the SSB. If RSRP of the SSB is greater than a specific threshold, the terminal selects one RO from one or more ROs associated with an index of the SSB, to initiate an uplink access signal. The first threshold may be understood as a length of time in which the terminal processes the SSB and selects the RO. The first threshold may be preconfigured information, or may be information sent by the network device to the terminal, as shown in FIG. 15. As shown in FIG. 15, the network device further performs S930.

S930: The network device sends threshold information to the terminal. Correspondingly, the terminal receives the threshold information from the network device.

The threshold information includes the first threshold. It should be noted that S903 is an optional step. When the terminal does not know existence of the relay device, the terminal may determine the RO in an original manner (namely, the manner described in FIG. 7). In this case, performance of this solution is poorer than that of forcibly requiring the terminal to perform S903, but a problem can still be resolved to some extent.

For the terminal, after determining the first RO, the terminal performs S904.

S904: The terminal sends an uplink access signal to the relay device on the first RO. Correspondingly, the relay device receives the uplink access signal from the terminal on the first RO by using a first spatial domain receiving parameter.

For example, the first RO is the RO 1 in FIG. 12, and the terminal sends the uplink access signal to the relay device on the RO 1. Correspondingly, the relay device receives the uplink access signal from the terminal on the RO 1 by using the first spatial domain receiving parameter.

The first spatial domain receiving parameter can be aligned with the terminal. For details, refer to descriptions of S906 and S907. Details are not described herein.

For the relay device, after receiving the uplink access signal, the relay device performs S905.

S905: The relay device forwards the uplink access signal to the network device. Correspondingly, the network device receives the uplink access signal from the relay device.

For example, FIG. 12 is still used as an example. The relay device forwards the uplink access signal to the network device on the first RO. Correspondingly, the network device receives the uplink access signal from the relay device on the first RO, and further performs a random access process. For details, refer to descriptions in the term explanation part. Details are not described herein again.

It should be noted that, for the relay device, the relay device may further report, to the network device, a time-frequency resource on which the relay device is in an uplink forwarding mode, to assist the network device in determining whether information received by the network device is forwarded by the relay device or is directly from the terminal. For example, the relay device sends information X to the network device. Correspondingly, the network device receives the information X from the relay device. The information X includes an SSB index. In other words, the relay device forwards an SSB corresponding to the SSB index. For the network device, the network device determines, based on the index in the information X, a RO associated with the index, and further determines that the relay device is in the uplink forwarding mode on the RO (the RO associated with the index in the information X). If receiving information on the RO (the RO associated with the index in the information X), the network device may consider that the information may be forwarded by the relay device. It should be understood that, for the relay device, after receiving an SSB from the network device, the relay device measures the SSB, to obtain a measurement result. The relay device determines, based on the measurement result of the SSB, an index carried in the information X.

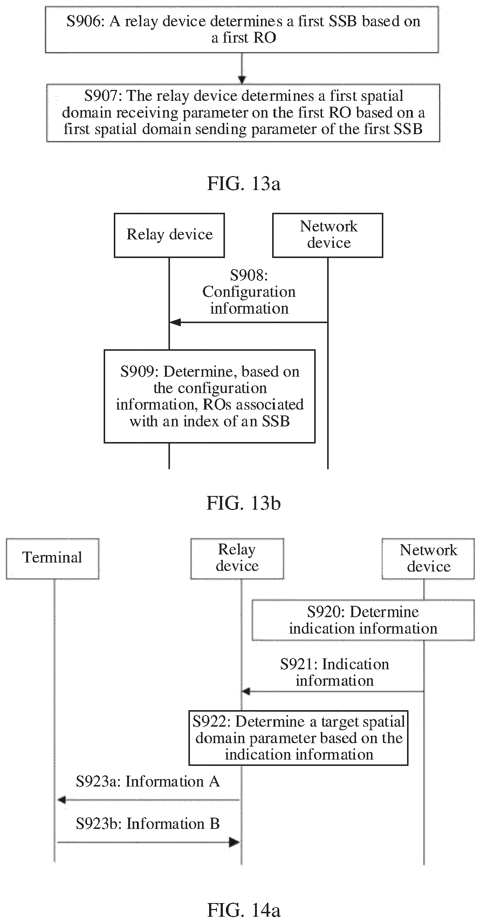

Alternatively, the network device may directly send information X to the relay device. The information X includes an SSB index, to indicate that the relay device is in the uplink forwarding mode on a RO (a RO associated with the index in the information X). Alternatively, the information X indicates a RO on which the relay device is in the uplink forwarding mode. For the relay device, the first spatial domain receiving parameter used by the relay device in S904 is aligned with the terminal. A process of determining a first spatial domain receiving parameter is shown in FIG. 13a. A relay device performs S906 and S907.

S906: The relay device determines a first SSB based on a first RO.

The first RO in S906 is consistent with the first RO in S905, and details are not described herein again.

The first SSB is one of at least one second SSB. For example, the first SSB is an SSB that is in the at least one second SSB and that is closest to the first RO in time domain. The second SSB is an SSB that is in at least one SSB forwarded by the relay device and that satisfies a ninth preset condition or a tenth preset condition.

For example, the ninth preset condition includes the following three items (in other words, the ninth preset condition is satisfied only when all of the three items are satisfied).

Preset condition i1: An index of the second SSB is associated with the first RO.

Preset condition i2: The second SSB is before the first RO. In other words, the relay device first forwards the second SSB, and then receives an uplink access signal by using the first RO.

Preset condition i3: A time interval between the second SSB and the first RO is greater than or equal to a first threshold. For the first threshold, refer to descriptions of S904a. Details are not described herein again. It should be understood that descriptions of the preset condition i3 may be replaced with that a time interval between a moment corresponding to the second SSB and a moment corresponding to the first RO is greater than or equal to the first threshold.

As shown in FIG. 12, it is assumed that the first RO is the RO 3. In this case, it may be determined, based on the foregoing conditions, that the first SSB is SSB 1. It is assumed that the first RO is a RO 4. In this case, it may be determined, based on the foregoing conditions, that the first SSB is an SSB 2.

For example, the tenth preset condition includes the following three items (in other words, the tenth preset condition is satisfied only when all of the three items are satisfied).

Preset condition j 1: An index of the second SSB is associated with the first RO.

Preset condition j2: The second SSB is before the first RO. For details, refer to descriptions of the preset condition i2. The details are not described herein again.

Preset condition j3: A time interval between the second SSB and the first RO is greater than a first threshold. For the first threshold, refer to descriptions of S904a. Details are not described herein again. It should be understood that descriptions of the preset condition j3 may be replaced with that a time interval between a moment corresponding to the second SSB and a moment corresponding to the first RO is greater than the first threshold.

The foregoing process may be understood as follows. If signal transmission is performed on the first RO, for example, a terminal initiates an uplink access signal on the first RO, after receiving the first SSB, the terminal determines the first RO based on the first SSB, and further initiates the uplink access signal on the first RO.

S907: The relay device determines a first spatial domain receiving parameter on the first RO based on a first spatial domain sending parameter of the first SSB.

That the first spatial domain receiving parameter is determined based on the first spatial domain sending parameter may be understood as that a beamforming vector corresponding to the first spatial domain receiving parameter is the same as a beamforming vector corresponding to the first spatial domain sending parameter, or may be understood as that a beam energy strongest direction corresponding to the first spatial domain receiving parameter is the same as a beam energy strongest direction corresponding to the first spatial domain sending parameter.

According to the foregoing method, if the terminal can receive the first SSB, it means that the first spatial domain sending parameter used by the relay device can be aligned with the terminal. Because the first spatial domain receiving parameter is determined based on the first spatial domain sending parameter, when the relay device uses the first spatial domain receiving parameter on the first RO, the first spatial domain receiving parameter can also be aligned with the terminal, to receive the uplink access signal of the terminal.

It should be understood that in S906 and S907, the first spatial domain receiving parameter on the first RO is used as an example for description. For the relay device, an index of an SSB forwarded by the relay device is associated with a plurality of ROs. Because the relay device does not know a RO on which the terminal sends the uplink access signal, one spatial domain receiving parameter needs to be determined for each RO, and a signal from the terminal is received on the RO by using the spatial domain receiving parameter corresponding to the RO. For a RO other than the first RO, the relay device repeats the processing processes in S906 and S907, to determine a spatial domain receiving parameter used by the relay device on the another RO. Details are not described herein again.

In some embodiments, the relay device further determines the ROs associated with the index of the SSB. As shown in FIG. 13b, a relay device performs S908 and S909.

S908: A network device sends configuration information to the relay device. Correspondingly, the relay device receives the configuration information from the network device.

The configuration information is used to configure a time-frequency resource of a RO. For example, the configuration information includes time domain position information of the RO and frequency domain position information of the RO in a SIB. For details, refer to descriptions of the RO in the term explanation part. Details are not described herein again. Alternatively, the configuration information may be information sent by the network device to the relay device by using another message. This is not limited in this embodiment of this application.

It should be noted that, in this embodiment of this application, the relay device may first perform S901b and then perform S908, may first perform S908 and then perform S901b, or may simultaneously perform S901b and S908.

This is not limited in this embodiment of this application.

For the relay device, after receiving the configuration information, the relay device performs S909.

S909: The relay device determines, based on the configuration information, ROs associated with an index of an SSB.

For example, each SSB forwarded by the relay device has one index. Indexes of different SSBs may be the same or different. Therefore, for the SSB forwarded by the relay device, there may be one or more indexes. For each index, the relay device determines, based on the configuration information in a sequence of frequency domain mapping first and time domain mapping second, a valid RO corresponding to each index. Two indexes are used as an example. For example, the two indexes are respectively denoted as SSB 1 and SSB 2. The relay device determines, based on the configuration information, valid ROs corresponding to the two indexes. As shown in FIG. 5, in terms of time domain, ROs associated with the index SSB 1 is located in a 1st column of time units of the AP 1 and a 1st column of time units of the AP 2, and ROs associated with the index SSB 2 is located in a 2nd column of time units of the AP 1 and a 2nd column of time units of the AP 2. In terms of frequency domain, the ROs associated with the index SSB 1 and the ROs associated with the index SSB 2 correspond to a same frequency.

In this way, the relay device may determine a time-frequency resource on which the uplink access signal is received.

It should be noted that, for the relay device, the relay device first performs S908 and S909, and then performs S906 and S907 for each RO in S909. In other words, the ROs determined in S909 include at least a first RO associated with an index of a second SSB.

In some embodiments, the network device can further send indication information to the relay device, so that the relay device determines a target spatial domain parameter. The target spatial domain parameter is a spatial domain parameter to be used by the relay device. For example, after receiving the indication information, the relay device communicates with the terminal by using the target spatial domain parameter. For example, the target spatial domain parameter includes at least one of the following: a target spatial domain sending parameter or a target spatial domain receiving parameter. The target spatial domain sending parameter is used by the relay device to forward information from the network device to the terminal after the relay device receives the information from the network device. The target spatial domain receiving parameter is used by the relay device to receive information from the terminal before the relay device forwards the information from the terminal to the network device. For example, when the network device wants to send an uplink access signal response message (msg 2) to the terminal, the network device may send the indication information to the relay device, so that the relay device determines the target spatial domain sending parameter based on the indication information. The target spatial domain sending parameter is used when the relay device forward the msg 2 to the terminal.

For the network device, as shown in FIG. 14a, a network device performs S920.

S920: The network device determines indication information.

The indication information indicating a target spatial domain parameter to a relay device. For the network device, if the network device receives an uplink access signal from a terminal on a first RO, it means that the relay device can align with the terminal after using a first spatial domain receiving parameter on the first RO. However, according to related descriptions of S906 and S907, the relay device performs determining based on a first spatial domain sending parameter for forwarding a first SSB. Therefore, after the first SSB is determined, the network device may indicate the target spatial domain parameter to the relay device, so that a transmission beam or a reception beam of the relay device is aligned with the terminal.

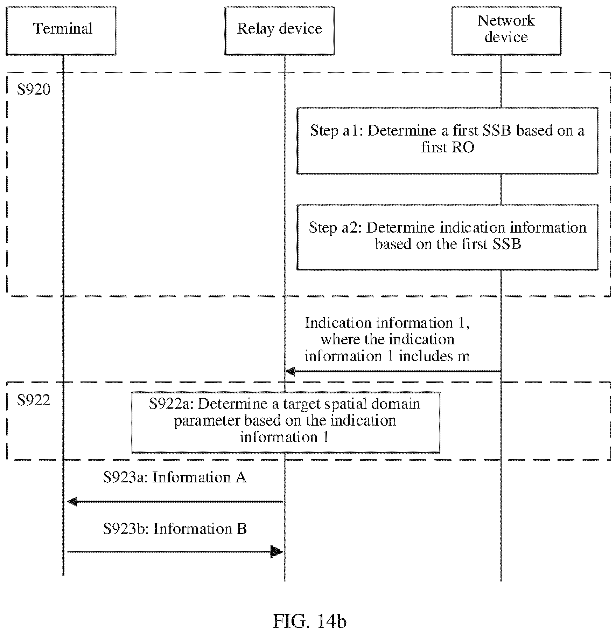

As shown in FIG. 14b, S920 includes step a1 and step a2.

Step a1: The network device determines the first SSB based on the first RO.

The first SSB is one of at least one second SSB. For example, the first SSB is an SSB that is in the at least one second SSB and that is closest to the first RO in time domain. The second SSB is an SSB that is in at least one SSB forwarded by the relay device and that satisfies a ninth preset condition or a tenth preset condition.

For example, for an implementation process of step a1, refer to descriptions of S906. Details are not described herein again.

It may be understood that the method in step a1 is consistent with the method in step S906 in which the relay device determines the first SSB based on the first RO.

Step a2: The network device determines the indication information based on the first SSB.

The indication information includes information indicating m. m satisfies the following formula:

$$m = \mathrm{mod}(\frac{\mathrm{SFN} * \mathrm{T_{SFN}} + h * \mathrm{T_{SFN}} * a}{\mathrm{T_{SSB}}}, M) \text{ Formula (1)}$$

mod() represents a modulo operator, SFN represents a system frame number of a system frame in which the first SSB is located, $T_{SFN}$ represents a system frame length, h represents half-frame indication information included in the first SSB, a represents a coefficient, and $T_{SSB}$ represents a periodicity length of the SSB.

It should be understood that, when one system frame is divided into a first half-frame and a second half-frame, a value of the coefficient a is 0.5. The half-frame indication information may be a half-frame (half_frame) identifier. For example, a value of the half-frame identifier is 1, to indicate that the first SSB is in a first half-frame of one system frame. On the contrary, a value of the half-frame identifier is 0, to indicate that the first SSB is in a second half-frame of one system frame. Alternatively, a value of the half-frame identifier is 1, to indicate that the first SSB is in a second half-frame of one system frame. On the contrary, a value of the half-frame identifier is 0, to indicate that the first SSB is in a first half-frame of one system frame. $\dfrac{SFN*T_{SFN}+h*T_{SFN}*a}{T_{SSB}}$ in Formula (1) may represent an index of a period in which the first SSB is located (where from a start moment of a system frame 0, an index of a $1^{st}$ period may be denoted as a period index 0, an index of a second period may be denoted as a period index 1, and the rest can be deduced by analogy). In addition, when the relay device forwards SSBs with a same index, a spatial domain sending parameter used in a $y^{th}$ period is the same as a spatial domain sending parameter used in a $(y+M)^{th}$ period. Therefore, in a $m^{th}$ period, a spatial domain sending parameter for forwarding an SSB whose index is the same as an index of the first SSB is the same as a spatial domain sending parameter for forwarding the first SSB.

The following further describes the indication information by using Example 1 and Example 2.

Example 1 is specific to a scenario in which spatial domain sending parameters used when the relay device forwards SSBs with different indexes in a same period are the same. For details, refer to descriptions in FIG. 10a or FIG. 10f. In this example, the indication information includes indication information 1 (to be specific, information indicating m). When the relay device forwards only one SSB with an index in a same period, it may be considered as a special case of Example 1. Details are not described below.

Example 2 is specific to a scenario in which spatial domain sending parameters used when the relay device forwards SSBs in a same period and at least two SSBs with indexes in the same period are forwarded are different. For details, refer to descriptions in FIG. 10b or FIG. 10c. In this example, the indication information includes indication information 2, to be specific, includes both information indicating m and information indicating the index of the first SSB (that is, a first index).

S921: The network device sends the indication information to the relay device. Correspondingly, the relay device receives the indication information from the network device.

The indication information in S921 is consistent with the indication information in S920, and details are not described herein again.

For the relay device, after receiving the indication information, the relay device performs S922.

S922: The relay device determines the target spatial domain parameter based on the indication information.

The indication information in S922 is consistent with the indication information in S921, and details are not described herein again.

For example, the relay device uses a spatial domain parameter indicated by the indication information as the target spatial domain parameter, or the relay device performs specific processing on a spatial domain parameter indicated by the indication information, and uses a processed parameter as the target spatial domain parameter.

The relay device determines the target spatial domain parameter based on a spatial domain sending parameter for forwarding an SSB in an $x^{th}$ period, where x and m satisfy Formula (2)

$$x=m+k*M+N \quad \text{Formula (2)}$$

k may be equal to 0, 1, 2, ..., or the like, M represents a quantity of interval periods used when the relay device forwards the SSBs with the same index by using a same spatial domain sending parameter, or a quantity of spatial domain sending parameters used by the relay device to forward an SSB, N represents an offset, and N and M may be agreed in advance as integers. When the relay device forwards the SSBs with the same SSB index, the spatial domain sending parameter used in the $y^{th}$ period is the same as the spatial domain sending parameter used in the $(y+M)^{th}$ period. Therefore, for the same SSB index, when k is set to different values, corresponding spatial domain sending parameters in different $x^{th}$ periods are still the same.

Specially, when both k and N are equal to 0, the relay device determines the target spatial domain parameter based on the spatial domain sending parameter for forwarding the SSB in the $m^{th}$ period.

It should be noted that, in this embodiment of this application, the parameters k and N may alternatively have other values. Details are not described one by one. A value of M may be a preconfigured parameter, or may be a value reported by the relay device. For details, refer to descriptions of the first information in FIG. 10e. Details are not described herein again.

The following further describes determining of the target spatial domain parameter by using Example 1 and Example 2.

Example 1 is specific to the scenario in which the spatial domain sending parameters used when the relay device forwards the SSBs with different indexes in the same period are the same. For the details, refer to the descriptions in FIG. 10a.

In Example 1, the indication information is denoted as the indication information 1, and the indication information 1 includes the information indicating m. In this case, as shown in FIG. 14b, S922 includes S922a.

S922a: The relay device determines the target spatial domain parameter based on the indication information 1.

For example, first, the relay device determines an index of the $x^{th}$ period, in other words, the $x^{th}$ period, based on the parameter m in the indication information 1 and the foregoing Formula (2).

Then, the relay device determines the target spatial domain parameter based on a spatial domain parameter for forwarding any SSB in the $x^{th}$ period. For example, when the target spatial domain parameter is the target spatial domain sending parameter, the target spatial domain sending parameter is determined based on a spatial domain sending parameter for forwardingof any SSB in the $x^{th}$ period. For example, a beamforming vector corresponding to the spatial domain sending parameter for forwarding any SSB in the $x^{th}$ period is the same as a beamforming vector corresponding to the target spatial domain sending parameter, or a beam energy strongest direction corresponding to the spatial domain sending parameter for forwarding any SSB in the $x^{th}$ period is the same as a beam energy strongest direction corresponding to the target spatial domain sending parameter. When the target spatial domain parameter is the target spatial domain receiving parameter, the target spatial domain receiving parameter is determined based on a spatial domain sending parameter for forwarding any SSB in the $x^{th}$ period. For example, a beamforming vector corresponding to the spatial domain sending parameter for forwarding any SSB in the $x^{th}$ period is the same as a beamforming vector corresponding to the target spatial domain receiving parameter, or a beam energy strongest direction corresponding to the spatial domain sending parameter for forwarding any SSB in the $x^{th}$ period is the same as a beam energy strongest direction corresponding to the target spatial domain receiving parameter.

In this way, the relay device can determine the target spatial domain parameter based on the indication information 1, so that the target spatial domain parameter used by the relay device can be aligned with the terminal.

Example 2 is specific to the scenario in which the spatial domain sending parameters used when the relay device forwards the SSBs in the same period and the at least two SSBs with indexes in the same period are forwarded are different. For the details, refer to the descriptions in FIG. 10b or FIG. 10c.

In Example 2, the indication information is denoted as the indication information 2, and the indication information 2 includes the information indicating m and information indicating the first index. m is used to determine an index of the $x^{th}$ period. For details, refer to descriptions of Formula (2). The SSB with the first index may be the first SSB in S903a. In this case, as shown in FIG. 14c, S922 includes S922b.

S922b: The relay device determines the target spatial domain parameter based on the indication information 2.

For example, first, the relay device determines an index of the $x^{th}$ period based on the parameter m in the indication information 2 and the foregoing Formula (2).

Then, the relay device determines the target spatial domain parameter based on a spatial domain parameter for forwarding an SSB whose index is the first index in the $x^{th}$ period. For example, when the target spatial domain parameter is the target spatial domain sending parameter, the target spatial domain sending parameter is determined based on a spatial domain sending parameter for forwarding the SSB whose index is the first index in the $x^{th}$ period. When the target spatial domain parameter is the target spatial domain receiving parameter, the target spatial domain receiving parameter is determined based on a spatial domain sending parameter for forwarding the SSB whose index is the first index in the $x^{th}$ period.

In this way, the relay device can determine the target spatial domain parameter based on the indication information 2, so that the target spatial domain parameter used by the relay device can be aligned with the terminal.

For the relay device, after determining the target spatial domain parameter, the relay device performs S923a and/or S923b. S923a and S923b are described as follows.

S923a: The relay device forwards, to the terminal by using the target spatial domain sending parameter, information A sent by the network device. Correspondingly, the terminal receives the information A.

For example, the information A is a random access response.

S923b: The relay device forwards, to the network device by using the target spatial domain receiving parameter, information B sent by the terminal.

For example, the information B is identification information of the terminal.

In other words, the relay device may determine the target spatial domain parameter based on the indication information, and the target spatial domain parameter can be aligned with the terminal, to help better perform information transmission between the terminal and the network device.

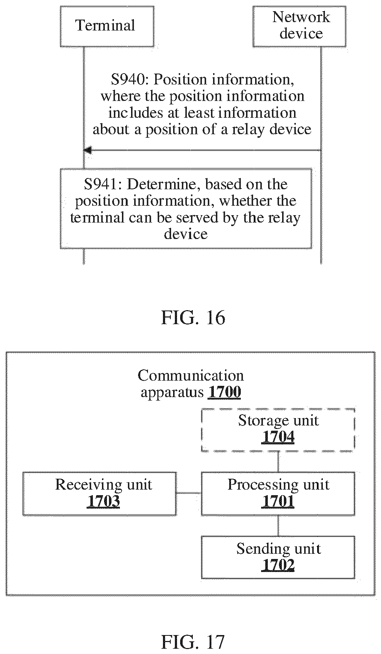

In some embodiments, as shown in FIG. 16, the network device further performs S940.

S940: The network device sends position information to the terminal. Correspondingly, the terminal receives the position information from the network device.

The position information includes at least information about a position of the relay device. For example, the position information includes geographical position information of the relay device.

It should be understood that the position information in S940 may be transmitted from the network device to the terminal via the relay device, or may be directly transmitted from the network device to the terminal.

It should be noted that, for the network device, the network device may first perform S940, and then perform S905.

For the terminal, after receiving the position information, the terminal performs S941.

S941: The terminal determines, based on the position information, whether the terminal can be served by the relay device.

For example, for the terminal, the terminal can learn of a position of the terminal. If the terminal is in an area range indicated by the position information, the terminal determines that the terminal can be served by the relay device. Further, S902 is performed. On the contrary, if the terminal is outside an area range indicated by the position information, the terminal determines that the terminal cannot be served by the relay device.

It should be understood that descriptions of S941 may be replaced with that the terminal determines, based on the position information, whether the terminal is served by the relay device.

It should be noted that S940 and S941 are optional steps. When the network device has learned of a position of each relay device, the terminal performs S940 and S941, to determine whether the terminal can be served by the relay device. Alternatively, in a possible implementation, the terminal may measure RSRP of a plurality of fourth SSBs, and determine, based on RSRP measurement results of the fourth SSBs, whether the terminal is served by the relay device. An index of the fourth SSB is the same as that of the second SSB. For the second SSB, refer to descriptions of S903a. Details are not described herein again. For example, an RSRP variance of a preset quantity of fourth SSBs is greater than a preset value 1, and in this case, the terminal determines that the terminal is served by the relay device. Alternatively, an RSRP peak of a preset quantity of fourth SSBs is greater than a preset value 2, and in this case, the terminal determines that the terminal is served by the relay device. In another example, for a period in which the fourth SSB is located, an RSRP strength change between fourth SSBs in every two adjacent periods is greater than a preset value 3, the terminal determines that the terminal is served by the relay device. In still another example, if a non-zero frequency component after normalization of a sequence obtained by performing fast Fourier transform (fast fourier transform, FFT) on an RSRP sequence of a preset quantity of fourth SSBs is greater than a preset value 4, the terminal determines that the terminal is served by the relay device. Alternatively, in another possible implementation, when the terminal has established a connection to the network device, the network device directly sends the indication information to the terminal, to indicate whether the terminal is served by the relay device.

It should be understood that, after determining that the terminal is served by the relay device, the terminal determines the first RO according to S903. If determining that the terminal is not served by the relay device, the terminal determines the RO in the manner in FIG. 7. In other words, an uplink access signal may be initiated on all ROs associated with an index of one SSB.

It should be noted that, in embodiments of this application, if an $X^{th}$ preset condition includes the foregoing two conditions, that a target object satisfies the first preset condition means that the target object satisfies all preset conditions of the first preset condition. For example, in embodiments of this application, that the first RO satisfies the first preset condition means that the first RO satisfies any preset condition in the first preset condition. To be specific, the first RO satisfies the preset condition a1 and the preset condition a2. That the first RO satisfies the second preset condition means that the first RO satisfies any preset condition in the second preset condition. To be specific, the first RO satisfies the preset condition b1 and the preset condition b2. That the first RO satisfies the third preset condition means that the first RO satisfies any preset condition in the third preset condition. To be specific, the first RO satisfies the preset condition c1 and the preset condition c2. That the first RO satisfies the fourth preset condition means that the first RO satisfies any preset condition in the fourth preset condition. To be specific, the first RO satisfies the preset condition d1 and the preset condition d2. That the third SSB is an SSB that satisfies the ninth preset condition means that the third SSB satisfies any preset condition in the ninth preset condition. To be specific, the third SSB satisfies the preset condition i1, the preset condition i2, and the preset condition i3. That the third SSB is an SSB that satisfies the tenth preset condition means that the third SSB satisfies any preset condition in the tenth preset condition. To be specific, the third SSB satisfies the preset condition j1, the preset condition j2, and the preset condition j3.

The foregoing mainly describes the solutions provided in embodiments of this application from a perspective of interaction between network elements. Correspondingly, an embodiment of this application further provides a communication apparatus. The communication apparatus may be the network element in the foregoing method embodiments, an apparatus including the foregoing network element, or a component that can be used in a network element. It may be understood that, to implement the foregoing functions, the communication apparatus includes a hardware structure and/or software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, FIG. 17 is a diagram of a structure of a communication apparatus 1700. The communication apparatus 1700 includes a processing unit 1701, a sending unit 1702, and a receiving unit 1703.

In a possible example, the communication apparatus 1700 is a terminal. The processing unit 1701 is configured to support the terminal in performing S903 in FIG. 9 and/or another processing operation that needs to be performed by the terminal in embodiments of this application. The sending unit 1702 is configured to support the terminal in performing S904 in FIG. 9 and/or another sending operation that needs to be performed by the terminal in embodiments of this application. The receiving unit 1703 is configured to support the terminal in performing S902 in FIG. 9 and/or another receiving operation that needs to be performed by the terminal in embodiments of this application.

In another possible example, the communication apparatus 1700 is a relay device. The processing unit 1701 is configured to support another processing operation that needs to be performed by the relay device in embodiments of this application. The sending unit 1702 is configured to support the relay device in performing S905 in FIG. 9 and/or another sending operation that needs to be performed by the relay device in embodiments of this application. The receiving unit 1703 is configured to support the relay device in performing S901b in FIG. 9 and/or another receiving operation that needs to be performed by the relay device in embodiments of this application.

In still another possible example, the communication apparatus 1700 is a network device. The processing unit 1701 is configured to support another processing operation that needs to be performed by the network device in embodiments of this application. The sending unit 1702 is configured to support the network device in performing S901a in FIG. 9 and/or another sending operation that needs to be performed by the network device in embodiments of this application. The receiving unit 1703 is configured to support the network device in performing S905 in FIG. 9 and/or another receiving operation that needs to be performed by the network device in embodiments of this application.

Optionally, the communication apparatus 1700 may further include a storage unit 1704, configured to store program code and data of the communication apparatus. The data may include but is not limited to original data, intermediate data, or the like.

The processing unit 1701 may be a processor or a controller, for example, may be a CPU, a general-purpose processor, an application-specific integrated circuit (application-specific integrated circuit, ASIC), a field programmable logic gate array (field programmable gate array, FPGA) or another programmable logic device, a transistor logic device, a hardware component, or any combination thereof. The processing unit 1701 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The sending unit 1702 may be a communication interface, a transmitter, a sending circuit, or the like. The communication interface is a general term. During specific implementation, the communication interface may include a plurality of interfaces.

The receiving unit 1703 may be a communication interface, a receiver, a receiving circuit, or the like. The communication interface is a general term. During specific implementation, the communication interface may include a plurality of interfaces.

The sending unit 1702 and the receiving unit 1703 may be physically or logically implemented as a same unit.

The storage unit 1704 may be a memory.

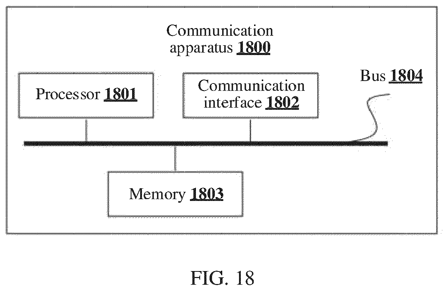

When the processing unit 1701 is a processor, the sending unit 1702 and the receiving unit 1703 are communication interfaces, and the storage unit 1704 is a memory, the communication apparatus in embodiments of this application may be shown in FIG. 18.

Refer to FIG. 18. The communication apparatus 1800 includes a processor 1801, a communication interface 1802, and a memory 1803. Optionally, the communication apparatus may further include a bus 1804. The communication interface 1802, the processor 1801, and the memory 1803 may be connected to each other by using the bus 1804. The bus 1804 may be a peripheral component interconnect (peripheral component interconnect, PCI) bus, an extended industry standard architecture (extended industry standard architecture, EISA) bus, or the like. The bus 1804 may be classified into an address bus, a data bus, a control bus, and the like. For ease of representation, only one thick line is used to represent the bus in FIG. 18, but this does not mean that there is only one bus or only one type of bus.

Optionally, an embodiment of this application further provides a computer program product carrying computer instructions. When the computer instructions are run on a computer, the computer is enabled to perform the method described in the foregoing embodiments.

Optionally, an embodiment of this application further provides a computer-readable storage medium. The computer-readable storage medium stores computer instructions. When the computer instructions are run on a computer, the computer is enabled to perform the method described in the foregoing embodiments.

Optionally, an embodiment of this application further provides a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in the corresponding method.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)), or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In the several embodiments provided in this application, it should be understood that the disclosed system, apparatus, and method may be implemented in other manners. For example, the apparatus embodiments described above are merely examples. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and parts displayed as units may or may not be physical units, may be located at one position, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a implementation. Based on such an understanding, the technical solutions of this application essentially or the part making contribution may be implemented in a form of a software product. The computer software product is stored in a readable storage medium, such as a floppy disk, a hard disk, or an optical disc of a computer, and includes several instructions for instructing a computer device (which may be a personal computer, a server, or a network device) to perform the method described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An uplink access method, comprising:

receiving, by a relay device, at least one synchronization signal/physical broadcast channel block SSB from a network device, and forwarding the at least one SSB, wherein each of the at least one SSB has one index, the index is associated with a plurality of random access channel occasions ROs, and the relay device uses one spatial domain sending parameter when forwarding each of the at least one SSB; and
receiving, by the relay device, an uplink access signal from a terminal on a first RO by using a first spatial domain receiving parameter, wherein
the first RO is one of the ROs associated with the index of each of the at least one SSB, the first spatial domain receiving parameter is determined based on a first spatial domain sending parameter used by the relay device to forward a first SSB, the first SSB is an SSB that is in at least one second SSB and that is closest to the first RO in time domain, and the second SSB is an SSB that is in the at least one SSB and that satisfies a preset condition.

2. The method according to claim 1, wherein

the preset condition comprises:

an index of the second SSB is associated with the first RO;
the second SSB is before the first RO; and
a time interval between the second SSB and the first RO is greater than or equal to a first threshold; or

the preset condition comprises:

an index of the second SSB is associated with the first RO;
the second SSB is before the first RO; and
a time interval between the second SSB and the first RO is greater than a first threshold.

3. The method according to claim 2, wherein the method further comprises:

receiving, by the relay device, configuration information from the network device, wherein the configuration information is used to configure a RO time-frequency resource, and the RO time-frequency resource comprises at least a time-frequency resource of the first RO, and
determining, by the relay device, an association relationship between the index of the second SSB and the first RO based on the configuration information.

4. The method according to any one of claims 1 to 3, wherein
the forwarding, by a relay device, the at least one SSB comprises:

periodically forwarding, by the relay device, an SSB with a first index, wherein
a spatial domain sending parameter used when the relay device forwards an SSB with the first index in a $y^{th}$ period is the same as a spatial domain sending parameter used when the relay device forwards an SSB with the first index in a $(y+M)^{th}$ period; and
two or more SSBs in the at least one SSB have the first index, y and M are positive integers, and $M \geq 2$.

5. The method according to claim 4, wherein the first index is the same as an index of the first SSB.

6. The method according to claim 4 or 5, wherein the method further comprises:
sending, by the relay device, first information to the network device, wherein the first information indicates a value of M.

7. The method according to any one of claims 4 to 6, wherein the method further comprises:

receiving, by the relay device, indication information from the network device, wherein the indication information comprises information indicating m; and
determining, by the relay device, a target spatial domain parameter based on a spatial domain sending parameter for forwarding an SSB in an $x^{th}$ period, wherein x is an integer determined based on m.

8. The method according to claim 7, wherein the determining, by the relay device, a target spatial domain parameter based on a spatial domain sending parameter for forwarding an SSB in an $x^{th}$ period comprises:
determining, by the relay device, the target spatial domain parameter based on a spatial domain sending parameter for forwarding any SSB in the $x^{th}$ period, wherein the relay device uses the same spatial domain sending parameter when forwarding all SSBs in the $x^{th}$ period.

9. The method according to claim 7, wherein the indication information further comprises information indicating the first index; and
the determining, by the relay device, a target spatial domain parameter based on a spatial domain sending parameter for forwarding an SSB in an $x^{th}$ period comprises:
determining, by the relay device, the target spatial domain parameter based on a spatial domain sending parameter for forwarding an SSB whose index is the first index in the $x^{th}$ period.

10. The method according to any one of claims 7 to 9, wherein
x and m satisfy: x=m+k*M+N, wherein k, M, and N are integers.

11. The method according to any one of claims 7 to 10, wherein the target spatial domain parameter comprises at least one of the following:

a target spatial domain sending parameter, used by the relay device to forward information from the network device to the terminal after the relay device receives the information from the network device; or
a target spatial domain receiving parameter, used by the relay device to receive information from the terminal before the relay device forwards the information from the terminal to the network device.

12. An uplink access method, comprising:

sending, by a network device, at least one SSB to a relay device; and
sending, by the network device, indication information to the relay device, wherein the indication information comprises information indicating m, the indication information is used by the relay device to determine a target spatial domain parameter based on a spatial domain sending parameter for forwarding an SSB in an $x^{th}$ period, and x is determined based on m.

13. The method according to claim 12, wherein the indication information further comprises information indicating a first index, and that the indication information is used by the relay device to determine a target spatial domain parameter based on a spatial domain sending parameter for forwarding an SSB in an $x^{th}$ period comprises: the indication information is used by the relay device to determine the target spatial domain parameter based on a spatial domain sending parameter for forwarding an SSB whose index is the first index in the $x^{th}$ period.

14. The method according to claim 12 or 13, wherein
x and m satisfy: x=m+k*M+N, wherein k, M, and N are integers.

15. The method according to any one of claims 12 to 14, wherein the method further comprises:

receiving, by the network device, an uplink access signal from the relay device on a first random access channel occasion RO;
determining, by the network device, a first SSB based on the first RO, wherein the first SSB is one of the at least one SSB; and
determining, by the network device, m based on the first SSB, wherein m satisfies the following formula:

$$m = \mathrm{mod}(\frac{SFN*T_{SFN}+h*T_{SFN}*a}{T_{SSB}}, M),$$

wherein
mod() represents a modulo operator, SFN represents a system frame number of a system frame in which the first SSB is located, $T_{SFN}$ represents a system frame length, h represents half-frame indication information comprised in the first SSB, a represents a coefficient, and $T_{SSB}$ represents a periodicity length of the SSB.

16. The method according to claim 15, wherein the determining, by the network device, a first SSB based on the first RO comprises:

determining, by the network device, the first SSB based on the first RO and a preset condition, wherein
the first SSB is an SSB that is in at least one second SSB and that is closest to the first RO in time domain, and
the second SSB is an SSB that is in the at least one SSB and that satisfies the preset condition.

17. The method according to claim 16, wherein

the preset condition comprises:

there is an association relationship between an index of the second SSB and the first RO;
the second SSB is before the first RO; and

a time interval between the second SSB and the first RO is greater than or equal to a first threshold; or

the preset condition comprises:

there is an association relationship between an index of the second SSB and the first RO;
the second SSB is before the first RO; and
a time interval between the second SSB and the first RO is greater than a first threshold.

18. The method according to any one of claims 14 to 17, wherein the method further comprises:
receiving, by the network device, first information from the relay device, wherein the first information indicates a value of M.

19. The method according to any one of claims 12 to 18, wherein the method further comprises:
sending, by the network device, position information to a terminal, wherein the position information comprises at least information about a position of the relay device, and the position information is used by the terminal to determine whether the terminal can be served by the relay device.

20. The method according to any one of claims 12 to 19, wherein the method further comprises:
sending, by the network device, threshold information to the terminal, wherein the threshold information comprises the first threshold, and the first threshold is used by the terminal to determine a RO for sending an uplink access signal.

21. The method according to any one of claims 12 to 20, wherein the target spatial domain parameter comprises at least one of the following:

a target spatial domain sending parameter, used by the relay device to forward information from the network device to the terminal after the relay device receives the information from the network device; or
a target spatial domain receiving parameter, used by the relay device to receive information from the terminal before the relay device forwards the information from the terminal to the network device.

22. An uplink access method, comprising:

receiving, by a terminal, a first synchronization signal/physical broadcast channel block SSB from a relay device at a first moment;
determining, by the terminal, a first random access channel occasion RO based on the first moment and the first SSB, wherein an index of the first SSB is associated with the first RO; a moment corresponding to the first RO is not earlier than or later than a second moment, the second moment is later than the first moment, and there is an interval of a first threshold between the second moment and the first moment; and the moment corresponding to the first RO is not later than or earlier than a third moment, the third moment is later than a fourth moment corresponding to a third SSB, there is an interval of the first threshold between the third moment and the fourth moment, an index of the third SSB is the same as that of the first SSB, and a period in which the third SSB is located is a next period of a period in which the first SSB is located; and
sending, by the terminal, an uplink access signal to the relay device on the first RO.

23. The method according to claim 22, wherein before the determining, by the terminal, a first RO based on the first moment and the first SSB, the method further comprises:

receiving, by the terminal, position information from a network device, wherein the position information comprises at least information about a position of the relay device; and
determining, by the terminal based on the position information, whether the terminal can be served by the relay device.

24. The method according to claim 22 or 23, wherein the method further comprises:
receiving, by the terminal, threshold information from the network device, wherein the threshold information comprises the first threshold.

25. A communication apparatus, comprising a processor and a memory, wherein the processor is coupled to the memory, the memory stores program instructions; and when the program instructions stored in the memory are executed by the processor, the communication apparatus is enabled to perform the method according to any one of claims 1 to 11, any one of claims 12 to 21, or any one of claims 22 to 24.

26. A chip, comprising a processor and an input/output interface, wherein the input/output interface is configured to receive a signal from an apparatus other than the chip and transmit the signal to the processor, or send a signal from the processor to an apparatus other than the chip; and the processor is configured to implement, by using a logic circuit or executing code instructions, the method according to any one of claims 1 to 11, any one of claims 12 to 21, or any one of claims 22 to 24.

27. A computer-readable storage medium, wherein the computer-readable storage medium stores a computer program; and when the computer program is run on a communication apparatus, the communication apparatus is enabled to perform the method according to any one of claims 1 to 11, the method according to any one of claims 12 to 21, or the method according to any one of claims 22 to 24.

1000

Terminal **11** | Relay device **12** | Network device **13**

FIG. 1

Donor antenna

Service antenna

FIG. 2

239

192

182

Subcarrier number

56

47

0

PSS | PBCH | PBCH / SSS / PBCH | PBCH

PBCH

0  1  2  3

Symbol number

FIG. 3

EP 4 447 520 A1

FIG. 4

RO

RO that has a mapping relationship with SSB 1

Transmission beam of a network device

Reception beam of the network device

SSB 1

| AP 1 | | AP 2 | |
|---|---|---|---|
| SSB 1 | SSB 2 | SSB 1 | SSB 2 |
| SSB 1 | SSB 2 | SSB 1 | SSB 2 |
| SSB 1 | SSB 2 | SSB 1 | SSB 2 |
| SSB 1 | SSB 2 | SSB 1 | SSB 2 |

Frequency domain

Time domain

SSB 1 SSB 2

FIG. 5

FIG. 6

FIG. 7

FIG. 8

900

| Terminal | | Relay device | | Network device |
|---|---|---|---|---|

S901a: Send at least one SSB

S901b: Receive at least one SSB

S902: Forward an SSB with a first index

S903: Determine a first RO based on the first SSB

S904: Uplink access signal

S905: Uplink access signal

FIG. 9

FIG. 10a

FIG. 10b

EP 4 447 520 A1

Transmission beam of a network device
Transmission beam of a relay device

1st period | 2nd period | 3rd period | 4th period

SSB burst

| SSB 1 | SSB 2 | ... | SSB k |

SSB burst

| SSB 1 | SSB 2 | ... | SSB k |

SSB burst

| SSB 1 | SSB 2 | ... | SSB k |

SSB burst

| SSB 1 | SSB 2 | ... | SSB k |

SSB 1 SSB 2 SSB k    SSB 1 SSB 2 SSB k    SSB 1 SSB 2 SSB k    SSB 1 SSB 2 SSB k    Transmission beam of the network device

SSB 1-1 SSB 2-1 SSB k-1    SSB 1-2 SSB 2-2 SSB k-2    SSB 1-3 SSB 2-3 SSB k-3    SSB 1-4 SSB 2-4 SSB k-4    Transmission beam of the relay device

FIG. 10c

Transmission
beam 2

Transmission
beam 3

Transmission
beam 1

FIG. 10d

| Relay device | | Network device |
| --- | --- | --- |

First information,
where the first
information indicates
a value of M

FIG. 10e

Transmission beam
of a network device
Transmission beam
of a relay device

| 1st period | 2nd period | 3rd period | 4th period |
|---|---|---|---|

SSB 1      SSB 1      SSB 1      SSB 1

SSB 1      SSB 1      SSB 1      SSB 1 — Transmission beam of the network device

SSB 1-1      SSB 1-2      SSB 1-3      SSB 1-4 — Transmission beam of the relay device

FIG. 10f

FIG. 11

FIG. 12

S906: A relay device determines a first SSB based on a first RO

S907: The relay device determines a first spatial domain receiving parameter on the first RO based on a first spatial domain sending parameter of the first SSB

FIG. 13a

Relay device

Network device

S908: Configuration information

S909: Determine, based on the configuration information, ROs associated with an index of an SSB

FIG. 13b

Terminal

Relay device

Network device

S920: Determine indication information

S921: Indication information

S922: Determine a target spatial domain parameter based on the indication information

S923a: Information A

S923b: Information B

FIG. 14a

Terminal | Relay device | Network device

S920

Step a1: Determine a first SSB based on a first RO

Step a2: Determine indication information based on the first SSB

Indication information 1, where the indication information 1 includes m

S922

S922a: Determine a target spatial domain parameter based on the indication information 1

S923a: Information A

S923b: Information B

FIG. 14b

| Terminal | Relay device | Network device |
|---|---|---|

S920

Step a1: Determine a first SSB based on a first RO

Step a2: Determine indication information based on the first SSB

Indication information 2, where the indication information 2 includes m and a first index

S922

S922b: Determine a target spatial domain parameter based on the indication information 2

S923a: Information A

S923b: Information B

FIG. 14c

| Terminal | Network device |
|---|---|

S930: Threshold information, where the threshold information includes a first threshold

FIG. 15

49

```
┌─────────────┐                    ┌─────────────┐
│  Terminal   │                    │  Network    │
│             │                    │  device     │
└──────┬──────┘                    └──────┬──────┘
       │                                  │
       │   S940: Position information,    │
       │   where the position information │
       │   includes at least information  │
       │   about a position of a relay device │
       │◄─────────────────────────────────│
       │                                  │
┌──────┴────────────────────────┐         │
│  S941: Determine, based on the │         │
│  position information, whether the │     │
│  terminal can be served by the relay │   │
│             device             │         │
└──────┬────────────────────────┘         │
       │                                  │
```

FIG. 16

```
┌─────────────────────────────────────────────────┐
│              Communication                        │
│              apparatus 1700                       │
│                    ┌ ─ ─ ─ ─ ─ ─ ─ ─ ─ ┐          │
│                    │   Storage unit     │          │
│                    │      1704          │          │
│                    └ ─ ─ ─ ─│─ ─ ─ ─ ─ ┘          │
│  ┌─────────────────┐   ┌────┴────────────┐        │
│  │ Receiving unit  │───│ Processing unit  │        │
│  │     1703        │   │     1701         │        │
│  └─────────────────┘   └────┬────────────┘        │
│                        ┌────┴────────────┐        │
│                        │  Sending unit    │        │
│                        │     1702         │        │
│                        └─────────────────┘        │
└─────────────────────────────────────────────────┘
```

FIG. 17

Communication
apparatus **1800**

Processor **1801**    Communication
interface **1802**    Bus **1804**

Memory **1803**

FIG. 18

## INTERNATIONAL SEARCH REPORT

| | International application No. |
|---|---|
| | **PCT/CN2022/140622** |

**A. CLASSIFICATION OF SUBJECT MATTER**

H04W 16/28(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, VEN, WPABS, CNKI, 3GPP: 波束, 同步, 广播, 信号块, 空域, 发送参数, 接收参数, 索引, 中继, beam, ssb, transmit, receive, parameter, index, relay

**C. DOCUMENTS CONSIDERED TO BE RELEVANT**

| Category* | Citation of document, with indication, where appropriate, of the relevant passages | Relevant to claim No. |
|---|---|---|
| X | US 2021235501 A1 (QUALCOMM INC.) 29 July 2021 (2021-07-29) description, paragraphs [0033]-[0134] | 1-21, 25-27 |
| A | CN 112787785 A (HUAWEI TECHNOLOGIES CO., LTD.) 11 May 2021 (2021-05-11) entire document | 1-27 |
| A | US 2021352737 A1 (LG ELECTRONICS INC.) 11 November 2021 (2021-11-11) entire document | 1-27 |
| A | FUJITSU. ""R1-1803939 Ambiguities about PUCCH beam indication"" *3GPP tsg_ran\WG1_RL1*, 07 April 2018 (2018-04-07), entire document | 1-27 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **03 March 2023** | **06 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/140622**

| Patent document cited in search report | | | Publication date (day/month/year) | Patent family member(s) | | | Publication date (day/month/year) |
|---|---|---|---|---|---|---|---|
| US | 2021235501 | A1 | 29 July 2021 | None | | | |
| CN | 112787785 | A | 11 May 2021 | None | | | |
| US | 2021352737 | A1 | 11 November 2021 | WO | 2020060358 | A1 | 26 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210141763
- CN 202210321314